# EUROPEAN PATENT SPECIFICATION

(11) **EP 3 876 486 B1**
(45) Date of publication and mention of the grant of the patent: **19.03.2025**
(21) Application number: 19880765.3
(22) Date of filing: 19.09.2019
(51) Int. Cl.: G06F 13/42, H03K 17/78, H04L 25/49, H04B 10/00

(54) **INFORMATION PROCESSING DEVICE AND INFORMATION REWRITE DEVICE**
INFORMATIONSVERARBEITUNGSVORRICHTUNG UND VORRICHTUNG ZUM UMSCHREIBEN VON INFORMATIONEN
DISPOSITIF DE TRAITEMENT DE L'INFORMATION ET DISPOSITIF DE RÉÉCRITURE DE L'INFORMATION

(30) Priority: 31.10.2018 JP 2018205823
(43) Date of publication of application: 08.09.2021
(73) Proprietor: OMRON Corporation, Shiokoji-dori, Shimogyo-ku, Kyoto-shi Kyoto 600-8530 (JP)
(72) Inventor: KATAOKA, Nobuo, Kizugawadai, Kizugawa-shi, Kyoto 619-0283 (JP); MIZUTANI, Seiji, Kizugawadai, Kizugawa-shi, Kyoto 619-0283 (JP)
(74) Representative: Emde, Eric
(86) International application number: PCT/JP2019/036842
(87) International publication number: WO 2020/090275

(56) References cited:
- EP-A1- 3 358 767
- JP-A- 2018 151 915
- JP-A- H05 266 392
- JP-A- H05 266 392
- US-A1- 2018 267 912

## Description

### [Technical Field]

The present invention relates to a signal processing device and the like configured to process electric signals.

### [Background Art]

In the related art, there has been three-line electrical equipment (such as sensors) which transmits and receives communication data in addition to detection information. Such electrical equipment requires at least two power source lines and one signal line in order to supply electric power and input and output signals. One of three-line communication methods is IO-Link (registered trademark). Non-Patent Literature 1 is a specification of IO-Link.

JP 2018 151915 A discloses to superimpose a digital data signal on an industrial signal for transmission.

### [Citation List]

### [Patent Literature]

[Non-Patent Literature 1]
"IO-Link Interface and System Specification", version 1.1.2, July 2013, IO-Link Community, Order No: 10.002, 4 Overview of SDCI, p. 32 to p. 37

### [Summary of Invention]

### [Technical Problem]

However, the technique in Non-Patent Literature 1 has a problem that the number of wirings increases. Also, according to the technique in Non-Patent Literature 1, a sensor converts a sensor detection signal into communication data and transmits the communication data to the outside, for example. Therefore, there is a problem that a time required for external equipment to recognize the detection signal increases or that circuit configurations of the sensor and the external equipment are complicated, for the conversion processing.

Also, in one example of a technique for reducing the number of wirings, reducing the number of wirings using, for communication, a superimposed signal in which a signal related to an operation element is superimposed on a data signal is considered. However, in order to actually use the superimposed signal for communication, it is necessary for both the electrical equipment and the communication device to support the communication using the superimposed signal, and there is thus a concern of increasing costs in a case in which a series of systems is introduced.

An aspect of the present disclosure was made in view of the aforementioned problem, and an object thereof is to provide a signal processing device or the like capable of transmitting predetermined information as a superimposed signal, in which the predetermined information is superimposed on an operation signal of electrical equipment, to a communication device.

### [Solution to Problem]

The present invention is defined by a signal processing device according to claim 1.

In other words, a signal processing device according to an aspect of the present disclosure includes: a superimposed signal transmission unit which transmits, to an external communication device, an operation signal in accordance with a state of an operation element, or receives, from the communication device, an operation signal for controlling the operation element, and transmitting, to the communication device, a data signal indicating predetermined information as a superimposed signal in which the data signal is superimposed on the operation signal; an information storage unit which stores the predetermined information; and an information rewrite unit which rewrites, on the basis of an external instruction input, the information stored in the information storage unit, while the superimposed signal transmission unit transmits the superimposed signal to the communication device.

An information rewrite device according to an aspect of the present disclosure is an information rewrite device which provides an instruction for rewriting information stored in the information storage unit to the signal processing device according to the aforementioned aspect, the information rewrite device including: an information acquisition unit which acquires information to be rewritten; and a light projecting unit which projects the optical signal in accordance with the information to the light receiving unit included in the signal processing device.

An information rewrite device according to an aspect of the present disclosure is an information rewrite device which provides an instruction for rewriting information stored in the information storage unit to the signal processing device according to the aforementioned aspect, the information rewrite device including: an information acquisition unit which acquires information to be rewritten; and a current control unit which generates the rewriting current signal in accordance with the information.

An information rewrite device according to an aspect of the present disclosure is an information rewrite device which provides an instruction for rewriting information stored in the information storage unit to the signal processing device according to the aforementioned aspect, the information rewrite device including: an information acquisition unit which acquires information to be rewritten; and a current control unit which generates the rewriting current signal in accordance with the information, in which the operation signal is an ON/OFF signal, and the current control unit generates the rewriting current signal with a current value that is higher than a current value in an ON signal of the operation signal.

An information rewrite device according to an aspect of the present disclosure is an information rewrite device which provides an instruction for rewriting information stored in the information storage unit to the signal processing device according to the aforementioned aspect, the information rewrite device including: an information acquisition unit which acquires information to be rewritten; and a current control unit which generates the rewriting current signal in accordance with the information, in which the current control unit supplies a current to the signal processing device such that a current with a current value that is equal to or greater than the predetermined threshold value flows at a predetermined pulse width after activation of the signal processing device.

### [Advantageous Effects of Invention]

According to an aspect of the present disclosure, it is possible to provide a signal processing device and the like capable of transmitting predetermined information as a superimposed signal in which the predetermined information is superimposed on an operation signal of electrical equipment to a communication device.

### [Brief Description of Drawings]

Fig. 1 is a block diagram illustrating configurations of a signal processing device and an information rewrite device according to an aspect of the present disclosure.
Fig. 2 is a block diagram illustrating an example of circuit configurations of electrical equipment that supports a superimposed signal and an input unit that is a communication device.
Fig. 3 is a block diagram illustrating a configuration of a control system according to an aspect of the present disclosure.
Fig. 4 is a diagram schematically illustrating an example of a signal waveform.
Fig. 5 is a circuit diagram illustrating configurations of the signal processing device and the information rewrite device.
Fig. 6 is a diagram illustrating a specific example of rewriting and verification of information using the signal processing device and the information rewrite device according to an aspect of the present disclosure.
Fig. 7 is a flow diagram illustrating an example of a flow of processing executed by the signal processing device and the information rewrite device according to an aspect of the present disclosure, where (a) illustrates a flow diagram of the signal processing device 100 and (b) illustrates a flow diagram of the information rewrite device.
Fig. 8 is a diagram illustrating a specific example of rewriting and verification of information using the signal processing device and the information rewrite device which are transmitting superimposed signals.
Fig. 9 is a flow diagram illustrating an example of a flow of processing executed by the signal processing device according to an aspect of the present disclosure.
Fig. 10 is a block diagram illustrating configurations of the signal processing device and the information rewrite device according to an aspect of the present disclosure.
Fig. 11 is a circuit diagram illustrating configurations of the signal processing device and the information rewrite device according to an aspect of the present disclosure.
Fig. 12 is a schematic diagram illustrating an overview of a rewriting current signal.
Fig. 13 is a diagram illustrating a specific example of rewriting and verification of information using the signal processing device and the information rewrite device.
Fig. 14 is a flow diagram illustrating an example of a flow of processing executed by the signal processing device and the information rewrite device according to an aspect of the present disclosure, where (a) illustrates a flow diagram of the signal processing device 100 and (b) illustrates a flow diagram of the information rewrite device.
Fig. 15 is a block diagram illustrating configurations of the signal processing device and the input unit according to an aspect of the present disclosure.
Fig. 16 is a circuit diagram illustrating configurations of the signal processing device and the input unit according to an aspect of the present disclosure.
Fig. 17 is a block diagram illustrating configurations of the signal processing device and the input unit according to an aspect of the present disclosure.
Fig. 18 is a diagram illustrating a specific example of rewriting of information and switching of an operation mode using the signal processing device and the input unit, where (a) illustrates rewriting of information, (b) illustrates switching of an operation mode, and (c) illustrates a specific example of a switching instruction and rewritten data.
Fig. 19 is a flow diagram illustrating an example of a flow of processing executed by the signal processing device according to an aspect of the present disclosure.
Fig. 20 is a flow diagram illustrating an example of a flow of processing executed by the input unit according to an aspect of the present disclosure.
Fig. 21 is a flow diagram illustrating an example of a flow of processing executed by the input unit according to an aspect of the present disclosure.

### [Description of Embodiments]

### §1. Assumed configuration example

### (Configurations of electrical equipment and communication device that support superimposed signals)

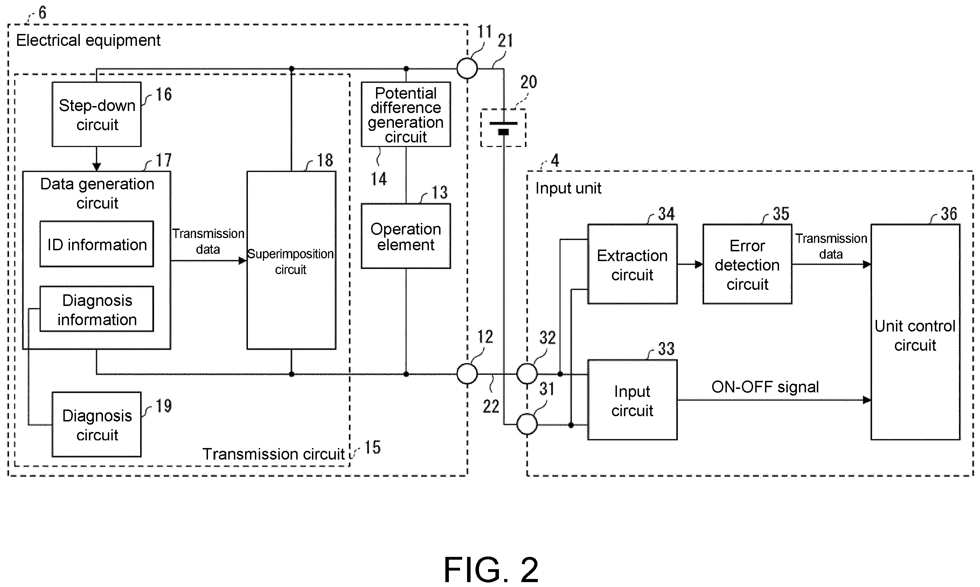

Before explanation of electrical equipment and the like according to an aspect of the present disclosure, a configuration of electrical equipment and the like that support communication using a superimposed signal in which a signal related to an operation element is superimposed on a data signal will be described first using Fig. 2. Fig. 2 is a block diagram illustrating an example of circuit configurations of electrical equipment that supports superimposed signals and an input unit that is a communication device. Here, an example of electrical equipment 6 (limit switch) and an input unit 4 will be described. The electrical equipment 6 and the input unit 4 are connected to each other with a pair of signal lines 21 and 22. The signal line 21 is connected to a first input terminal 31 of the input unit 4 and a first terminal 11 of the electrical equipment 6. The signal line 22 is connected to a second input terminal 32 of the input unit 4 and a second terminal 12 of the electrical equipment 6. A route of the signal line 21 is provided with a power source 20. The power source 20 is a DC power source that generates a predetermined voltage (24 V here).

The electrical equipment 6 includes the first terminal 11, the second terminal 12, an operation element 13, a potential difference generation circuit 14, and a transmission circuit 15. The transmission circuit 15 includes a step-down circuit 16, a data generation circuit 17, a superimposition circuit 18, and a diagnosis circuit 19. The operation element 13 is connected between the first terminal 11 and the second terminal 12. The potential difference generation circuit 14 is connected in series to the operation element 13 in an electrification path between the first terminal 11 and the second terminal 12. The potential of the second terminal 12 changes in accordance with a state of the operation element 13. In other words, the second terminal 12 outputs an output signal (operation signal) in accordance with a state of the operation element 13 to the outside (signal line 22).

The transmission circuit 15 is connected between the first terminal 11 and the second terminal 12. The transmission circuit 15 operates as a power source using a voltage between the first terminal 11 and the second terminal 12. The step-down circuit 16 steps down the voltage between the first terminal 11 and the second terminal 12 to a predetermined voltage and outputs the predetermined voltage to the data generation circuit 17. The data generation circuit 17 operates using the voltage applied by the step-down circuit 16 and generates transmission data to be transmitted to the input unit 4. The transmission data includes, for example, an identifier (ID information) unique to the electrical equipment 6. The data generation circuit 17 outputs the transmission data to the superimposition circuit 18. The superimposition circuit 18 superimposes the received transmission data as a data signal on the output signal. In this manner, the transmission circuit 15 outputs the superimposed signal in which the data signal is superimposed on the output signal from the second terminal 12 to the signal line 22.

The diagnosis circuit 19 operates using the voltage applied by the step-down circuit 16 and generates diagnosis data representing diagnosis information of the electrical equipment 6. The diagnosis circuit 19 includes a check circuit related to an element (for example, the operation element 13) of the electrical equipment 6 and generates diagnosis data indicating whether or not the electrical equipment 6 is normal in accordance with whether or not an output from the check circuit is normal. The diagnosis circuit 19 outputs the diagnosis data (diagnosis information) to the data generation circuit 17. The data generation circuit 17 may include the diagnosis data in transmission data.

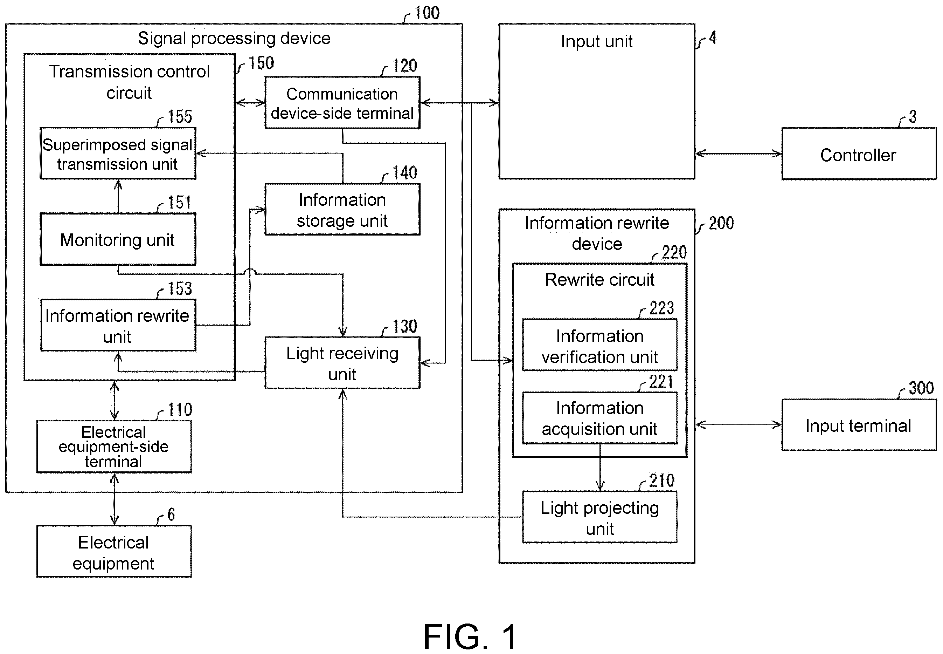

The input unit 4 includes a first input terminal 31, a second input terminal 32, an input circuit 33, an extraction circuit 34, an error detection circuit 35, and a unit control circuit 36. In Fig. 1, illustration of a configuration of a portion that performs transmission to a controller 3 is omitted. The potential of the first input terminal 31 is maintained constant (at GND, for example). A superimposed signal is input from the signal line 22 to the second input terminal 32.

The input circuit 33 extracts an output signal from the superimposed signal and outputs the output signal to the unit control circuit 36. The extraction circuit 34 extracts a data signal from the superimposed signal and outputs the data signal to the error detection circuit 35. The error detection circuit 35 performs error detection on the data signal using an arbitrary data checking method such as cyclic redundancy check (CRC) or Manchester coding check. The error detection circuit 35 outputs the data signal and the error detection result to the unit control circuit 36. Note that in a case in which an error is detected from the data signal, the error detection circuit 35 may not output the data signal to the unit control circuit 36. The unit control circuit 36 outputs the output signal and the data signal to the controller 3. The error detection circuit 35 and the unit control circuit 36 may be configured by one integrated circuit or a plurality of integrated circuits, for example.

### (Configuration of communication system 1)

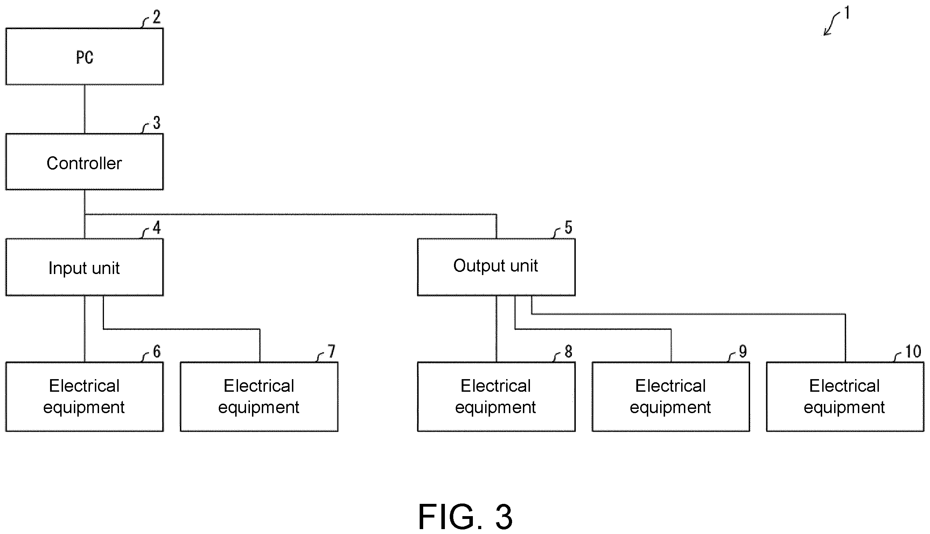

Fig. 3 is a block diagram illustrating a configuration of a communication system including the electrical equipment 6 that supports superimposed signals. A communication system 1 includes a PC 2 (a personal computer, an information processing device), a controller 3, an input unit 4, an output unit 5, and electrical equipment 6 to 10. The PC 2 is connected to the controller 3. The PC 2 receives information related to the electrical equipment 6 to 10 from the controller 3 and transmits a control command to the controller 3. The controller 3 is connected to the input unit 4 and the output unit 5. The controller 3 transmits signals for causing the electrical equipment 6 to 10 to operate or for controlling the electrical equipment 6 to 10 to the input unit 4 and the output unit 5 in response to the control command. The controller 3 transmits, to the PC 2, signals from the electrical equipment 6 to 10 received via the input unit 4 or the output unit 5.

The input unit 4 is receiving equipment (communication device), is connected to a plurality of pieces of electrical equipment such that communication can be performed therebetween, and can receive superimposed signals from the electrical equipment. In the illustrated example, the electrical equipment 6 and 7 is connected to the input unit 4. In other words, the input unit 4 can receive superimposed signals from the electrical equipment 6 and 7. In the configuration example, the input unit 4 cyclically receives the data signals included in the superimposed signals from the electrical equipment 6 and 7. Note that the data signals may not be cyclically received. The connection between the input unit and the electrical equipment 6 and 7 is established by a pair of signal lines, for example. Also, the input unit 4 can extract data signals from the received superimposed signals, determine communication states between the electrical equipment that is transmission sources of the superimposed signals and the input unit 4 itself, and output the result to the controller 3. The input unit 4 can configure the communication system 1 as illustrated in Fig. 3 along with a plurality of pieces of equipment including the electrical equipment 6 and 7 and the controller 3.

When a communication error is detected in communication between the input unit 4 and the electrical equipment 6 and 7 in regard to the communication state between the input unit 4 and the electrical equipment 6 and 7, the input unit 4 can determine whether or not the communication error has occurred in a transition period of values of the operation signals in the electrical equipment 6 and 7. Note that communication errors detected in a period other than the transition period include, for example, a communication error due to repetition of instantaneous disconnection when a switch contact point is in an unstable state, a communication error due to disturbance noise, disconnection of a wiring, and the like.

The electrical equipment 6 and 7 operates using power supplied from the input unit 4 and transmits signals in accordance with states of operation elements included in the electrical equipment 6 and 7 to the input unit 4. Here, the electrical equipment 6 is a limit switch including a switch as the operation element. The electrical equipment 7 is a sensor including a sensing element as the operation element. When the electrical equipment 6 is a limit switch, and when the electrical equipment 7 is a sensor, the operation element 13 can output an ON/OFF signal as an output signal (operational signal). Although the case in which the electrical equipment 6 is a limit switch will be described below, the same can apply to the case in which the electrical equipment 7 is a sensor.

The output unit 5 (receiving equipment) is connected to electrical equipment 8 to 10. Each piece of the electrical equipment 8 to 10 is connected to the output unit 5 with a pair of signal lines. The output unit 5 causes the electrical equipment 8 to 10 to operate and controls the electrical equipment 8 to 10 on the basis of instructions from the PC 2 and the controller 3. Also, the output unit 5 transmits data signals received from the electrical equipment 8 to 10 to the controller 3. The output unit 5 receives superimposed signals from the electrical equipment 8 to 10 and extracts data signals from the received superimposed signals. Further, the output unit 5 can determine a communication state between the output unit 5 and the electrical equipment. Then, the output unit 5 can output the determination result to the controller 3.

The electrical equipment 8 to 10 operates using power supplied from the output unit 5 and is controlled by a control signal received from the output unit 5. Here, the electrical equipment 8 is a relay device including a coil as an operation element. The electrical equipment 9 is an electromagnetic valve including a coil as an operation element. The electrical equipment 10 is an electric actuator including a coil as an operation element.

### (Operations of electrical equipment 6 and input unit 4 in communication using superimposed signal)

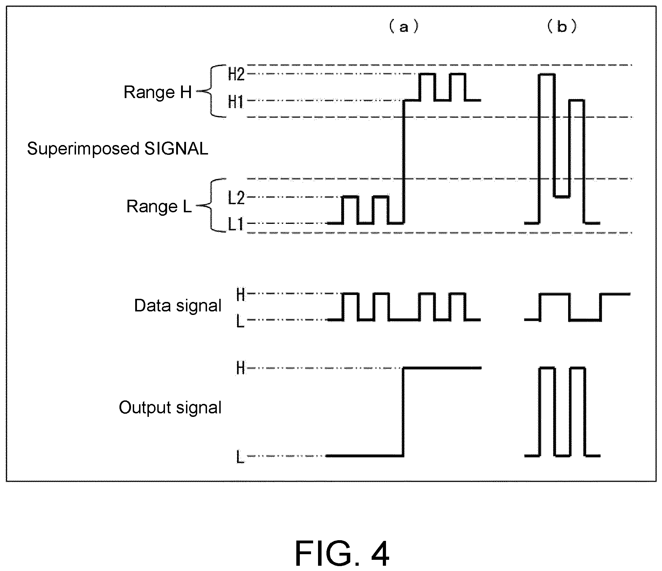

In regard to operations of the electrical equipment and the communication device in communication using superimposed signals, an example of operations of the electrical equipment 6 and the input unit 4 will be described using Fig. 4. Note that Fig. 4 can be similarly described for a combination of the electrical equipment 7 and the input unit 4 and for a combination of any of the electrical equipment 8 to 10 and the output unit 5 as well. Fig. 4 is a diagram schematically illustrating an example of a signal waveform. (a) in Fig. 4 illustrates a case in which the cycle of the output signal (operation signal) is longer than the cycle of the data signal, and (b) illustrates a case in which the cycle of the output signal is shorter than the cycle of the data signal. A signal obtained by superimposing the output signal and the data signal is the superimposed signal. The waveform of the superimposed signal is a waveform obtained by superimposing the waveform of the output signal and the waveform of the data signal. The amplitude of the output signal is greater than the amplitude of the data signal. Therefore, it is possible to ascertain the original value of the output signal and the original value of the data signal form the superimposed signal. Here, the output signal is H in a case in which the switch of the electrical equipment 6 is ON, and the output signal is L in a case in which the switch of the electrical equipment 6 is OFF.

The value of the superimposed signal can be split into L1, L2, H1, and H2 from the lowest value. If the superimposed signal is within a range L, the output signal is L. The range L includes L1 and L2. If the superimposed signal is within a range H that is higher than the range L, then the output signal is H. The range H includes H1 and H2. In a case in which the superimposed signal is L1 or H1, the data signal is L. In a case in which the superimposed signal is L2 or H2, the data signal is H.

If the input unit 4 receives the superimposed signal from the electrical equipment 6, then the input unit 4 determines which of H and L the output signal from the superimposed signal is (which of ON and OFF the switch of the electrical equipment 6 is). Then, the input unit 4 can extract a data signal from the superimposed signal and output information in accordance with the data signal to the outside.

In this manner, the input unit 4 can determine which of ON and OFF the switch of the electrical equipment 6 is on the basis of the superimposed signal and further execute processing in accordance with the data signal.

Also, the input unit 4 can output an identifier and position information of the electrical equipment 6 along with information indicating disconnection of a wiring and the like to the outside. The PC 2 can provide, to a user, a notification regarding a communication state between the input unit 4 and the electrical equipment 6 in three categories, namely normal, alert, and a failure, for example, in accordance with information received from the input unit 4 via the controller 3. The user can determine whether or not maintenance is to be performed on the electrical equipment 6 through acquisition of the information related to the communication state between the input unit 4 and the electrical equipment 6 using the PC 2.

### §2. Configuration example

Since a data signal is superimposed on an output signal and is then transmitted in communication using a superimposed signal, in a case in which the electrical equipment 6 that does not support superimposed signals is connected to the input unit 4 that supports superimposed signals, for example, the electrical equipment does not transmit the data signal to the input unit 4. In this case, since the input unit 4 cannot extract the data signal from the superimposed signal, the input unit 4 can execute only processing equivalent to that of the input unit 4 that does not support superimposed signals. Thus, the signal processing device according to an aspect of the present disclosure uses predetermined information related to the electrical equipment 6 stored in advance as the data signal, generates a superimposed signal in which the data signal is superimposed on the operation signal of the electrical equipment 6, and transmits the superimposed signal to the input unit 4.

### (Configurations of signal processing device and information rewrite device)

The block diagram illustrates configurations of signal processing device 100 and an information rewrite device 200 according to an aspect of the present disclosure. Note that it is assumed that the input unit 4 supports communication using superimposed signals in the following description. Also, although the electrical equipment 6 and the input unit 4 that support communication using superimposed signals will be described below, the same can apply to the electrical equipment 8, 9, and 10 and the output unit 5 that support communication using superimposed signals as well using a similar technical idea.

The signal processing device 100 can receive and store predetermined information related to the electrical equipment 6 from the information rewrite device 200. The signal processing device 100 can use the predetermined information as a data signal, generate a superimposed signal in which the data signal is superimposed on an operation signal of the electrical equipment 6, and transmit the superimposed signal to the input unit 4. The signal processing device 100 can have any configuration as long as the signal processing device 100 can be disposed between the electrical equipment 6 and the input unit 4 and may include an outer shape like a communication cable, for example. The signal processing device 100 includes an electrical equipment-side terminal 110, a communication device-side terminal 120, a light receiving unit 130, an information storage unit 140, and a transmission control circuit 150. The transmission control circuit 150 includes a monitoring unit 151, an information rewrite unit 153, and a superimposed signal transmission unit 155.

The electrical equipment-side terminal 110 is a terminal used by the signal processing device 100 to transmit or receive an output signal to or from the external electrical equipment 6. The electrical equipment-side terminal 110 and the electrical equipment 6 are connected to each other with a communication cable or the like. The communication device-side terminal 120 is a terminal used by the signal processing device 100 to transmit or receive an output signal to or from the input unit 4. The communication device-side terminal 120 is also a terminal used by the signal processing device 100 to transmit a superimposed signal to the information rewrite device 200. Although in the illustrated example, two devices, namely the input unit 4 and the information rewrite device 200 are connected to the one communication device-side terminal 120, it is possible to selectively establish connection to either the input unit 4 or the information rewrite device 200.

The light receiving unit 130 can receive an optical signal from the outside. Specifically, the light receiving unit 130 can receive predetermined information related to the electrical equipment 6 as the optical signal from the information rewrite device 200. The light receiving unit 130 may be a photo transistor that generates a current when receiving light, for example, and the optical signal received by the light receiving unit 130 is transmitted to the information rewrite unit 153. Note that the signal processing device 100 may be provided with a window portion that transmits light in order for the light receiving unit 130 to be able to efficiently receive the optical signal.

The information storage unit 140 can store the predetermined information related to the electrical equipment 6. The predetermined information is written in the information storage unit 140 by the information rewrite unit 153, and the predetermined information is read by the superimposed signal transmission unit 155.

The transmission control circuit 150 includes a partial configuration of the transmission circuit 15 in Fig. 2. In other words, the transmission control circuit 150 further includes a data generation circuit 17, a superimposition circuit 18, a diagnosis circuit 19, and the like, which are not illustrated in Fig. 1. The data generation circuit 17, the diagnosis circuit 19, and the information rewrite unit 153 can be realized by a micro processing unit (MPU), for example, using information stored in the memory and executing commands of a program that is software for realizing each function.

The monitoring unit 151 can monitor reception of the optical signal performed by the light receiving unit 130. The monitoring unit 151 may perform monitoring only during a preset monitoring time or may continue the monitoring until the light receiving unit 130 receives the optical signal. The monitoring unit 151 can transmit a monitoring result to the superimposed signal transmission unit 155.

The information rewrite unit 153 can rewrite information stored in the information storage unit 140 on the basis of an instruction input from the outside. In other words, the information rewrite unit 153 can acquire the predetermined information from the optical signal received by the light receiving unit 130 and cause the information storage unit 140 to store the predetermined information. The information rewrite unit 153 overwrites the predetermined information in the information storage unit 140 in accordance with the type of the information.

The superimposed signal transmission unit 155 can generate a superimposed signal in which transmission data (data signal) generated by the data generation circuit 17 is superimposed on the operation signal output from the operation element 13 of the electrical equipment 6 by the superimposition circuit 18 and transmit the superimposed signal to the input unit 4. Specifically, the superimposed signal transmission unit 155 can generate the superimposed signal by superimposing the data signal generated from the predetermined information stored in the information storage unit 140 on the operation signal received from the electrical equipment 6 through the electrical equipment-side terminal 110. The superimposed signal transmission unit 155 can transmit the generated superimposed signal to the input unit 4 via the communication device-side terminal 120.

The information rewrite device 200 can be communicably connected to the signal processing device 100 and an input terminal 300, which will be described later. The information rewrite device 200 can acquire the predetermined information related to the electrical equipment 6 from the input terminal 300. The information rewrite device 200 can project light in regard to the acquired predetermined information as an optical signal to the signal processing device 100. The information rewrite device 200 can receive the superimposed signal from the signal processing device 100 through the communication device-side terminal 120 and verify whether or not the predetermined information indicated by the data signal included in the superimposed signal conforms to details projected as an optical signal by the device itself. Note that the information rewrite device 200 may output the verification result to a display unit, which is not illustrated, or external equipment including the input terminal 300. The information rewrite device 200 includes a light projecting unit 210 and a rewrite circuit 220, and the rewrite circuit 220 includes an information acquisition unit 221 and an information verification unit 223.

The light projecting unit 210 can project the predetermined information input from the information acquisition unit 221 as an optical signal. The light projecting unit 210 may be a light emitting diode (LED), for example, and may project the optical signal toward the light receiving unit 130 of the signal processing device 100 with an optical cable or the like. The optical signal may represent the predetermined information by causing a projection pattern to change, for example. Specifically, the light projecting unit 210 may provide a notification of the predetermined information using a light color change, a blinking pattern, and light intensity. The light projecting unit 210 can further project optical signals indicating a start of rewriting and an end of rewriting before and after the projection of the optical signal in accordance with the information to be rewritten.

The rewrite circuit 220 can execute various functions to rewrite the predetermined information related to the electrical equipment 6 stored in the information storage unit 140 of the signal processing device 100. The rewrite circuit 220 can receive the superimposed signal from the signal processing device 100 through the communication device-side terminal 120 and verify the superimposed signal.

The information acquisition unit 221 can acquire information to be rewritten from the input terminal 300. The information acquisition unit 221 inputs the acquired information to the light projecting unit 210.

The information verification unit 223 can extract the data signal from the superimposed signal received from the signal processing device 100 and verify whether or not the predetermined information related to the electrical equipment 6 indicated by the data signal conforms to details projected as the optical signal by the light projecting unit 210. Specifically, the information verification unit 223 executes two kinds of verification, namely verification regarding whether or not the information storage unit 140 has been rewritten in the signal processing device 100 and verification regarding whether or not the predetermined information after the rewriting conforms to the detail of the projection.

The input terminal 300 is communicably connected to the information rewrite device 200 and can input the predetermined information related to the electrical equipment 6, which the information storage unit 140 of the signal processing device 100 is caused to store, to the information rewrite device 200. The input terminal 300 may be, for example, a smartphone, and a user of the input terminal 300 may input the predetermined information through a touch operation or the like. At this time, the information rewrite device 200 may be an adaptor that is provided with a dedicated light source operating as the light projecting unit 210 and that can be connected to the smartphone. Further, the input terminal 300 may be configured integrally with the information rewrite device 200. In a case in which the input terminal 300 is a smartphone, the smartphone may use a display or an illumination LED as the light projecting unit 210.

Also, the predetermined information related to the electrical equipment 6 may be input to the input terminal 300 by a method other than the manual method. In a case in which ID information or the like of the electrical equipment 6 is provided at a part of a casing of the electrical equipment 6 as a two-dimensional code, for example, the input terminal 300 may read and acquire the two-dimensional code using a camera or the like.

### (Circuit configurations of signal processing device and information rewrite device)

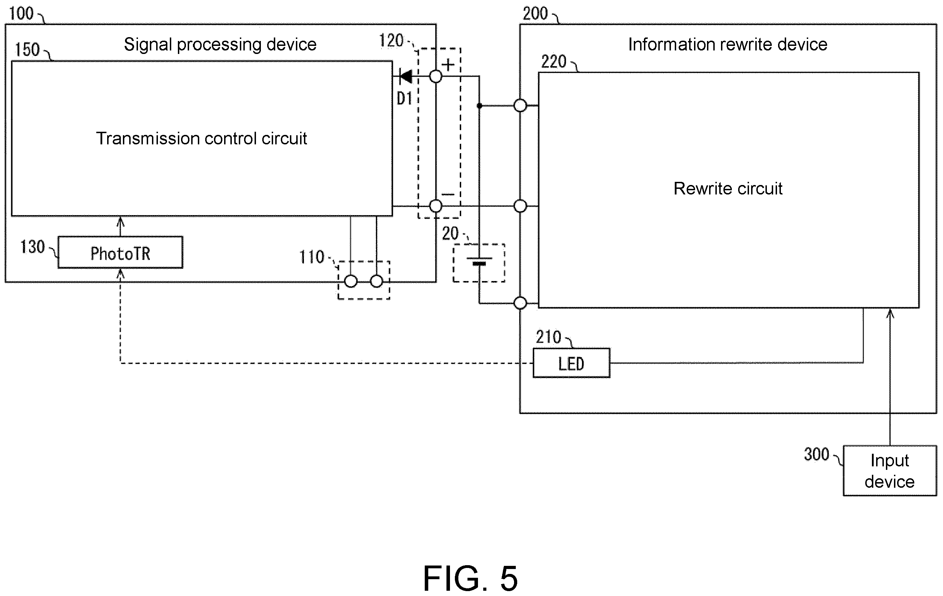

Fig. 5 is a circuit diagram illustrating configurations of the signal processing device 100 and the information rewrite device 200 according to an aspect of the present disclosure. Note that in the illustrated example, illustration of a part of circuit that has been described using Fig 2 is omitted.

In the signal processing device 100, each of the electrical equipment-side terminal 110 and the communication device-side terminal 120 includes two paths. A current supplied from the power source 20 is input to a + terminal side of the communication device-side terminal 120, and the current is input to the transmission control circuit 150 through a diode D1. In other words, the signal processing device 100 drives the transmission control circuit 150 and the like using the current supplied from the power source 20.

The light receiving unit 130 illustrated as "PhotoTR" in the drawing receives an optical signal along the path represented by the broken line from the light projecting unit 210 illustrated as "LED" in the information rewrite device 200 and inputs an electric signal obtained by converting the optical signal to the transmission control circuit 150.

The transmission control circuit 150 transmits and receives a current and a signal using the electrical equipment-side terminal 110 and the communication device-side terminal 120. Specifically, the transmission control circuit 150 receives an output signal in accordance with a state of the operation element 13 of the electrical equipment 6 from the electrical equipment 6, which is not illustrated, through the electrical equipment-side terminal 110 and superimposes the predetermined information stored in the information storage unit 140 on the output signal to generate a superimposed signal. Further, the transmission control circuit 150 transmits the generated superimposed signal to the rewrite circuit 220 of the information rewrite device 200 through the communication device-side terminal 120.

The transmission control circuit 150 can rewrite the predetermined information stored in the information storage unit 140 with details input from the light projecting unit 210 by forming the light receiving unit 130 and the light projecting unit 210 with the circuit configurations as described above. Then, the superimposed signal in which the rewritten details are superimposed on the output signal can be transmitted to the rewrite circuit 220. In this manner, the information rewrite device 200 can verify whether or not the predetermined information included in the superimposed signal received by the rewrite circuit 220 conforms to details projected from the light projecting unit 210.

### (Specific example of rewriting and verification of information)

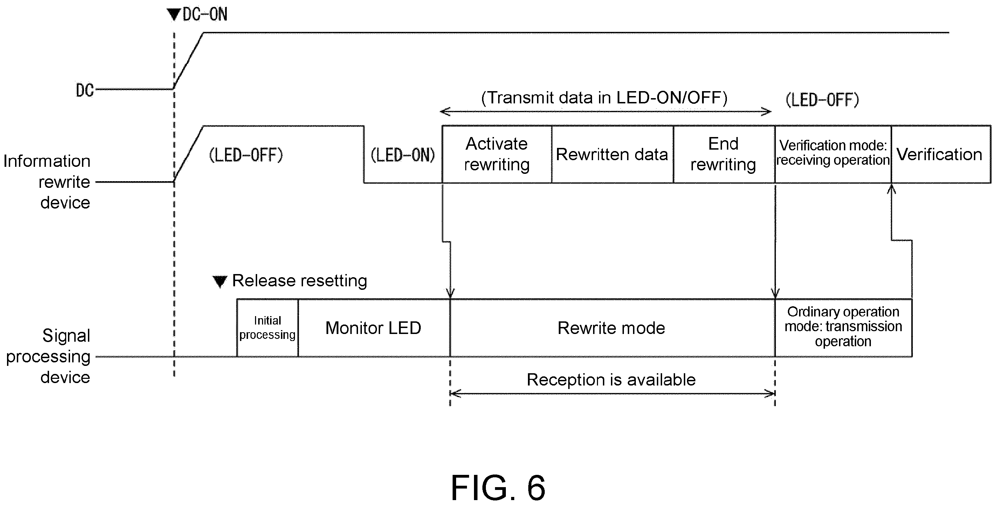

Fig. 6 is a diagram illustrating a specific example of rewriting and verification of information using the signal processing device 100 and the information rewrite device 200 according to an aspect of the present disclosure. Note that in the following description, it is assumed that information to be rewritten using the input terminal 300 has been input in advance to the information rewrite device 200.

In the illustrated example, "DC" represents a DC current supplied from the power source 20, and "DC-ON" represents a timing at which the power source 20 is activated. "(LED-ON)" and "(LED-OFF)" represent whether or not the light projecting unit 210 is projecting light. "Activate rewriting", "rewritten data", and "end rewriting" correspond to "a projection pattern corresponding to a rewriting start instruction indicating a start of rewriting", "a projection pattern in accordance with rewritten data that is details to be rewritten", and "a projection pattern corresponding to a rewriting end instruction indicating an end of rewriting", respectively. Also, "Verification mode: receiving operation" is an operation mode to receive a superimposed signal transmitted from the signal processing device 100, and "verification" is an operation mode to verify predetermined information indicated by a data signal included in the received superimposed signal.

"LED monitoring, "rewrite mode", and "ordinary operation mode: transmission operation" respectively indicate operation modes in the signal processing device 100. "LED monitoring" indicates that the monitoring unit 151 is monitoring reception of an optical signal performed by the light receiving unit 130 in the signal processing device 100, and "rewrite mode" indicates that the information rewrite unit 153 is in a state in which details in the information storage unit 140 can be rewritten in the signal processing device 100. "Ordinary operation mode: transmission operation" indicates a state where the signal processing device 100 generates a superimposed signal, in which a data signal indicating predetermined information is superimposed on an output signal acquired from the electrical equipment 6 and transmits the superimposed signal to the information rewrite device 200. In other words, operation modes in which when an optical signal has been detected by the monitoring unit 151, the superimposed signal transmission unit 155 does not transmit the superimposed signal and the information rewrite unit 153 rewrites information stored in the information storage unit 140 on the basis of the optical signal are "LED monitoring" and "rewrite mode". Also, an operation mode in which after the rewriting processing performed by the information rewrite unit 153 has been completed, the superimposed signal transmission unit 155 transmits the superimposed signal is "ordinary operation mode: transmission operation".

First, if the power source 20 is activated, then the transmission control circuit 150 of the signal processing device 100 releases a reset state, and after performing initial processing, the monitoring unit 151 starts to monitor reception performed by the light receiving unit 130 in "LED monitoring".

On the other hand, the information rewrite device 200 changes the state from "(LED-OFF)" to "(LED-ON)" asynchronously with the state of the signal processing device 100. The information rewrite device 200 then projects an optical signal in order from "activate rewriting", "rewritten data", and "end rewriting" using the light projecting unit 210. After a series of projecting processes are completed, the information rewrite device 200 shifts the operation mode to "ordinary operation mode: transmission operation" and starts reception of the superimposed signal.

If the reception of the optical signal projected during an operation in "LED monitoring" is detected, then the signal processing device 100 shifts the operation mode to "rewrite mode". The signal processing device 100 receives information with which an optical signal of a projection pattern in accordance with "rewritten data" received after an optical signal of a projection pattern in accordance with "activate rewriting" is received during an operation in "rewrite mode" is rewritten, and performs rewriting of the information storage unit 140 using the information rewrite unit 153. Thereafter, if an optical signal of a projection pattern in accordance with "end rewriting" is received, "rewrite mode" is ended, and the operation mode is shifted to "ordinary operation mode: transmission operation". The signal processing device 100 generates a data signal using predetermined information after rewriting stored in the information storage unit 140 and transmits a superimposed signal including the data signal to the information rewrite device 200 using the superimposed signal transmission unit 155 in "ordinary operation mode: transmission operation".

If the information rewrite device 200 receives the superimposed signal from the signal processing device 100 during an operation in "ordinary operation mode: transmission operation", then the information rewrite device 200 shifts the operation mode to "verification" and then performs verification of the predetermined information indicated by the data signal included in the superimposed signal using the information verification unit 223.

In this manner, the predetermined information related to the electrical equipment 6 stored in the signal processing device 100 is rewritten using the information rewrite device 200. Therefore, the user can rewrite the predetermined information even after production or shipping of the signal processing device 100. The signal processing device 100 can thus transmit, to the input unit 4, the superimposed signal in which the predetermined information after rewriting is superimposed on the output signal received from the electrical equipment 6. Therefore, even in a case in which the electrical equipment 6 does not support transmission of superimposed signals, for example, it is possible to realize transmission of superimposed signals through utilization of the signal processing device 100.

Note that although the signal processing device 100 shifts the operation mode to "rewrite mode" on the basis of the optical signal including a rewriting activation instruction in the description of Fig. 6, the trigger of the shifting to "rewrite mode" is not limited thereto. The signal processing device 100 may be triggered by reception of some light at the light receiving unit 130 after activation of the device, for example, to shift to "rewrite mode" or may shift to "rewrite mode" on the basis of an input from external equipment.

Although the signal processing device 100 is illustrated as a device that is different from the electrical equipment 6 in the description of Fig. 1, the signal processing device 100 may be configured integrally with the electrical equipment 6. For example, the configuration of the signal processing device 100 may be incorporated in the electrical equipment 6.

### §3. Operation example

### (Flow of processing)

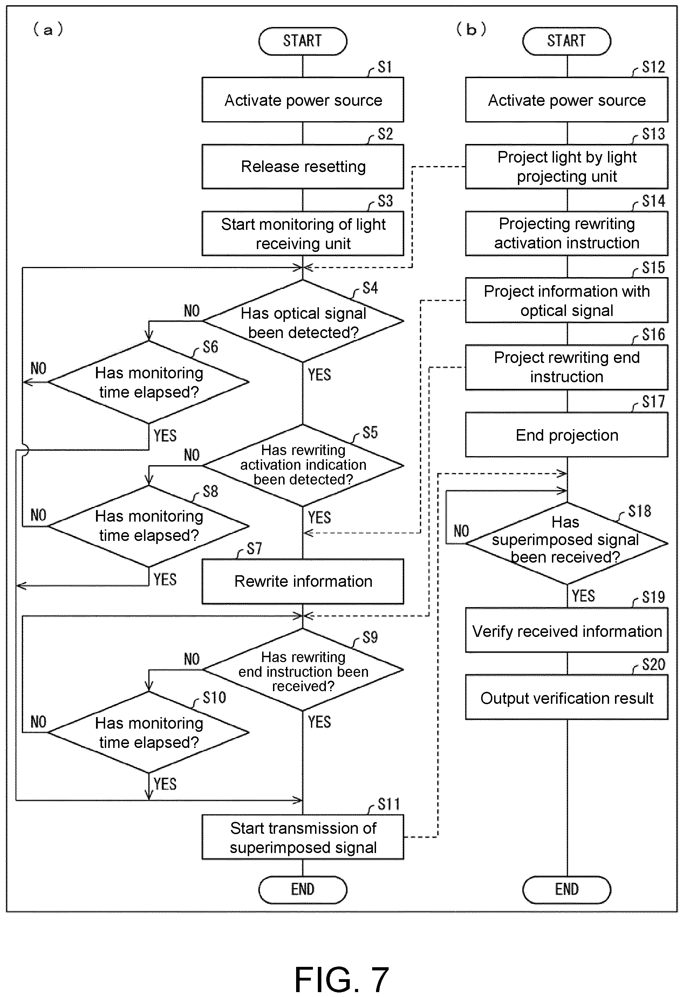

Each diagram in Fig. 7 is a flow diagram illustrating a flow of processing executed by the signal processing device 100 and the information rewrite device 200 according to an aspect of the present disclosure. (a) of Fig. 7 illustrates a flow diagram of the signal processing device 100, and (b) of Fig. 7 illustrates a flow diagram of the information rewrite device 200. Note that in the following description, it is assumed that the signal processing device 100 and the information rewrite device 200 are connected to the power source 20 similarly to Fig. 5 and information to be rewritten has been input in advance in the information rewrite device 200 using the input terminal 300.

First, the flow diagram of the signal processing device 100 will be described using (a) of Fig. 7. First, the signal processing device 100 and the power source 20 are activated (S1). After S1, the signal processing device 100 releases a reset state if current supply is started (S2). Then, after the reset state is released, the signal processing device 100 executes initialization processing, and after the initialization processing is completed, the monitoring unit 151 starts to monitor reception performed by the light receiving unit 130 (S3).

After S3, the monitoring unit 151 determines whether or not the light receiving unit 130 has detected an optical signal projected from the light projecting unit 210 (S4). If the optical signal is projected from the light projecting unit 210 through processing in S12, which will be described later, then the light receiving unit 130 receives the optical signal. In a case in which it is determined that the monitoring unit 151 has detected the projected optical signal (YES in S4), the monitoring unit 151 further determines whether or not the light receiving unit 130 has received a rewriting activation instruction as an optical signal (S5). On the other hand, in a case in which it is determined that no optical signal has been detected in S4 (NO in S4), the monitoring unit 151 determines whether or not a preset monitoring time has elapsed (S6).

In a case in which it is determined that the rewriting activation instruction projected from the light projecting unit 210 through processing in S14, which will be described later, has been received in S5 (YES in S5), the processing proceeds to S7. In S7, the information rewrite unit 153 rewrites the predetermined information related to the electrical equipment 6 stored in the information storage unit 140 on the basis of an optical signal projected from the light projecting unit 210 through processing in S15, which will be described later (S7). On the other hand, in a case in which it is determined that no rewriting activation instruction has not been received, the processing proceeds to S8.

In a case in which it is determined that the monitoring time has not elapsed in S6 (NO in S6), the processing proceeds to S4, and the processing in S4 to S6 is executed again. On the other hand, in a case in which it is determined that the monitoring time has elapsed (YES in S6), the processing proceeds to S11. In a case in which it is determined that the monitoring time has not elapsed in S8 (NO in S8) similarly to S6, the processing proceeds to S4, and the processing in S4 to S8 is executed again. On the other hand, in a case in which it is determined that the monitoring time has elapsed (YES in S8), the processing proceeds to S11.

In S9, the monitoring unit 151 determines whether or not an optical signal indicating a rewriting end instruction projected from the light projecting unit 210 through processing in S16, which will be described later, has been received (S9). In a case in which it is determined that the optical signal has not been received (NO in S9), the monitoring unit 151 determines whether or not a preset monitoring time has elapsed (S10). In a case in which it is determined that the monitoring time has not elapsed (NO in S10), the processing proceeds to S9, and the processing in S9 is executed again. On the other hand, in a case in which it is determined that the monitoring time has elapsed (YES in S10), the signal processing device 100 ends reception of a rewriting instruction related to the predetermined information, and the processing proceeds to S11.

In S11, the signal processing device 100 starts to transmit the superimposed signal using the superimposed signal transmission unit 155 (S11). Note that the predetermined information indicated by the data signal included in the superimposed signal transmitted in S11 is details before rewriting in a case in which the processing has proceeded from S6 to S11 and is details after rewriting in S7 in a case in which the processing has proceeded from S9 or S10 to S11.

The signal processing device 100 according to an aspect of the present disclosure can transmit the superimposed signal in which the predetermined information is superimposed on the operation signal to the communication device through the aforementioned processing. Also, it is possible to rewrite the predetermined information included in the details transmitted as the superimposed signal on the basis of the optical signal. Therefore, the user can rewrite the predetermined information even after production and shipping of the signal processing device 100. Further, it is possible to realize transmission of the superimposed signal using the signal processing device 100 even in a case in which the external electrical equipment 6 does not support the transmission of superimposed signals.

Next, the flow diagram of the information rewrite device 200 will be described using (b) of Fig. 7. First, the information rewrite device 200 and the power source 20 are activated (S12). Note that if the power source 20 has already been activated through the aforementioned processing in S1, it is not necessary to activate the power source 20 in S12. Thereafter, the information rewrite device 200 starts projection using the light projecting unit 210 (S13).

After S13, the information rewrite device 200 projects a rewriting activation instruction as an optical signal using the light projecting unit 210 (S14). Thereafter, the information rewrite device 200 uses information that has been input from the input terminal 300 and has already been acquired by the information acquisition unit 221 as an optical signal and projects the optical signal using the light projecting unit 210 (S15). If the light projecting unit 210 ends the projection of the predetermined information as the optical signal, then the information rewrite device 200 projects an optical signal indicating a rewriting end instruction using the light projecting unit 210 (S16) and ends a series of projecting processes (S17).

After S17, the rewrite circuit 220 of the information rewrite device 200 determines whether or not the superimposed signal transmitted by the signal processing device 100 through the aforementioned processing in S11 has been received (S18). In a case in which it is determined that the superimposed signal has been received (YES in S18), the information verification unit 223 verifies whether or not the predetermined information indicated by the data signal extracted from the superimposed signal conforms to the details projected as the optical signal by the light projecting unit 210 in S14 (S19). The information rewrite device 200 outputs the result of the verification in S19 to a display unit or external equipment, which is not illustrated (S20).

The information rewrite device 200 according to an aspect of the present disclosure can rewrite the information stored in the information storage unit 140 of the signal processing device 100 with the optical signal through the aforementioned processing. Then, the information rewrite device 200 can verify whether or not the information has been correctly rewritten from the superimposed signal received from the signal processing device 100.

### §4. Modification example 1 no falling under the claimed invention

In the aforementioned configuration example, the signal processing device 100 is configured to start the transmission of the superimposed signal after rewriting the information stored in the information storage unit 140. However, the signal processing device 100 is configured to rewrite the information during the transmission of the superimposed signal.

### (Configurations of signal processing device and information rewrite device)

The signal processing device 100 and the information rewrite device 200 according to an aspect of the present disclosure will be described using Fig. 1. Note that the information rewrite device 200 is the same as the information rewrite device 200 according to the aforementioned configuration example.

Although a basic configuration of the signal processing device 100 is the same as that in the aforementioned configuration example, a part of the configuration is different. In the modification example, the superimposed signal transmission unit 155 is different in that a superimposed signal is transmitted even when the monitoring unit 151 is monitoring reception performed by the light receiving unit 130 and the transmission of the superimposed signal is stopped at a timing at which the light receiving unit 130 detects the optical signal.

### (Specific example of rewriting and verification of information)

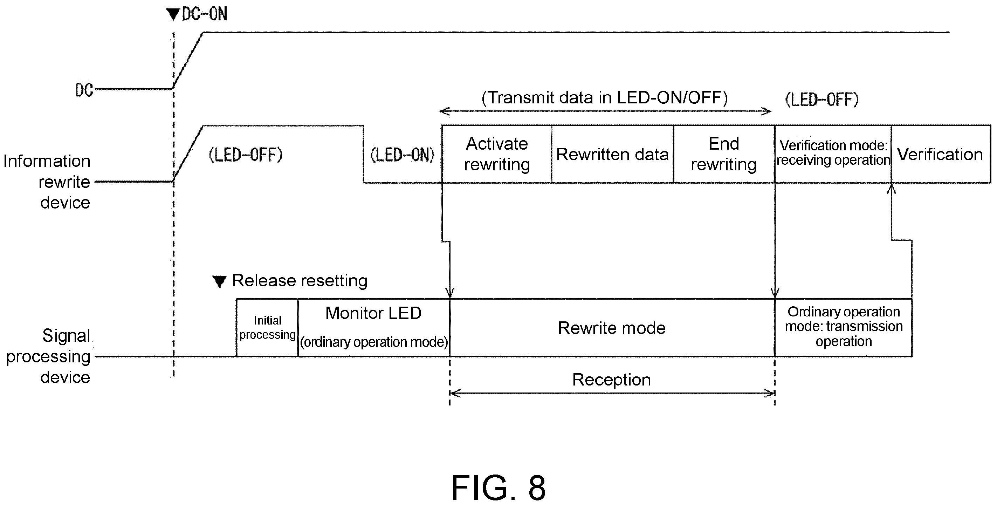

Fig. 8 is a diagram illustrating a specific example of rewriting and verification of information using the signal processing device 100 during transmission of a superimposed signal and the information rewrite device 200. Note that in the following description, it is assumed that the information to be rewritten has been input to the information rewrite device 200 in advance using the input terminal 300, and description of the items with the same names as those in Fig. 6 will be omitted. Also, operations of the information rewrite device 200 are the same as those in Fig. 6, and description thereof will thus be omitted.

First, if the power source 20 is activated, then the transmission control circuit 150 of the signal processing device 100 releases a reset state, performs initial processing, and then operates in "LED monitoring (ordinary operation mode)". Here, "LED monitoring (ordinary operation mode)" is an operation mode in which both the monitoring of the reception of the light receiving unit 130 performed by the monitoring unit 151 and the transmission of the superimposed signal performed by the superimposed signal transmission unit 155 are performed.

If reception of the optical signal is detected during the operation in "LED monitoring (ordinary operation mode)", then the signal processing device 100 stops the transmission of the superimposed signal and then shifts the operation mode to "rewrite mode". The signal processing device 100 rewrites information on the basis of the optical signal received from the light projecting unit 210 of the information rewrite device 200 as described above using Fig. 6, then ends "rewrite mode", and shifts the operation mode to "ordinary operation mode: transmission operation". Operations of the signal processing device 100 in "ordinary operation mode: transmission operation" are the same as the details described above using Fig. 6. In this manner, the signal processing device 100 can rewrite the information using the information rewrite device 200 even after the transmission of the superimposed signal is started.

### (Flow of processing)

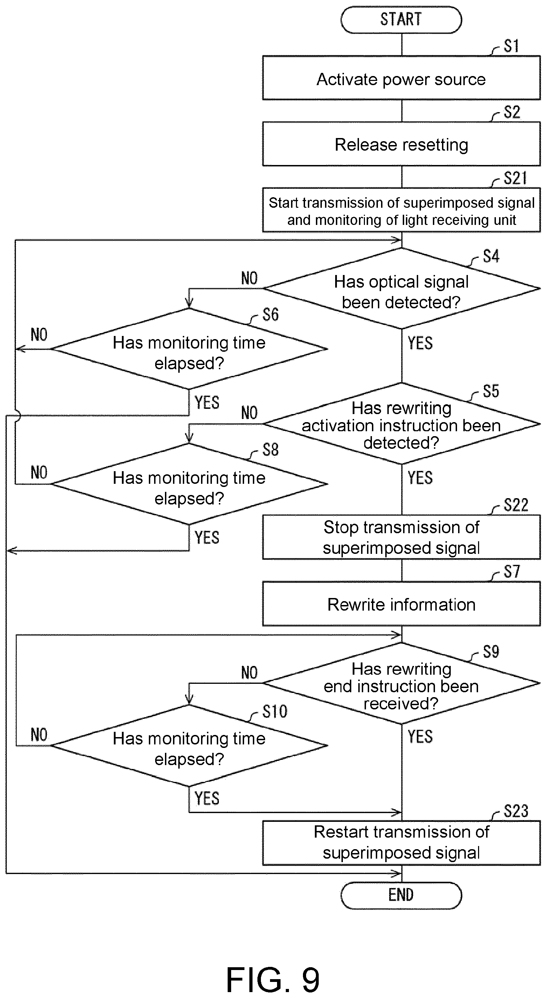

Fig. 9 is a flow diagram illustrating an example of a flow of processing executed by the signal processing device 100 according to an aspect of the present disclosure. Note that description of the same processing as those in (a) of Fig. 7 will be omitted in the following description. Also, the flow diagram of the information rewrite device 200 are completely the same as that in (b) of Fig. 7.

The signal processing device 100 executes the processing in S1 and S2 and then starts transmission of the superimposed signal performed by the superimposed signal transmission unit 155 and monitoring of the light receiving unit 130 performed by the monitoring unit 151 (S21). After S21, the signal processing device 100 executes the processing in S4 to S6 similarly to the aforementioned operation example. Here, since the superimposed signal transmission unit 155 has already started the transmission of the superimposed signal in S21, the point at which the series of processes end is different from that in (a) of Fig. 7 in a case in which the monitoring unit 151 determines that the preset monitoring time has elapsed S6 (YES in S6).

In a case in which it is determined that the rewriting activation instruction has been received in S5 (YES in S5), the superimposed signal transmission unit 155 stops the transmission of the superimposed signal (S22). The processing then proceeds to S7. On the other hand, in a case in which it is determined that the rewriting activation instruction has not been received (NO in S5), the processing proceeds to S8, and whether or not a monitoring time for the rewriting activation instruction has elapsed is determined (S8). Here, a point that the series of the processes end in a case in which the monitoring unit 151 determines that a preset monitoring time has elapsed in S8 (YES in S8) since the superimposed signal transmission unit 155 has already started the transmission of the superimposed signal in S21 is different from that in (a) of Fig. 7.

After S7, the signal processing device 100 executes the processing in S9 and S10 similarly to the aforementioned operation example. Then, in a case in which it is determined that the rewriting end instruction has been received in S9 (YES in S9), or in a case in which it is determined that the monitoring time has elapsed in S10 (YES in S10), the superimposed signal transmission unit 155 restarts the transmission of the superimposed signal (S23). Thereafter, the signal processing device 100 ends the series of processes.

The signal processing device 100 can rewrite the information on the basis of the optical signal even after the transmission of the superimposed signal is started and transmit the superimposed signal generated using information after the rewriting through the aforementioned processing.

### §5. Modification example 2

In the aforementioned configuration example and the modification example 1, the information rewrite device 200 is configured to input information to be rewritten to the signal processing device 100 through projection using the light projecting unit 210. However, the information rewrite device 200 may be configured to able to transmit the information to be rewritten to the signal processing device 100 through a path used to transmit and receive superimposed signals, for example.

### (Configurations of signal processing device and information rewrite device)

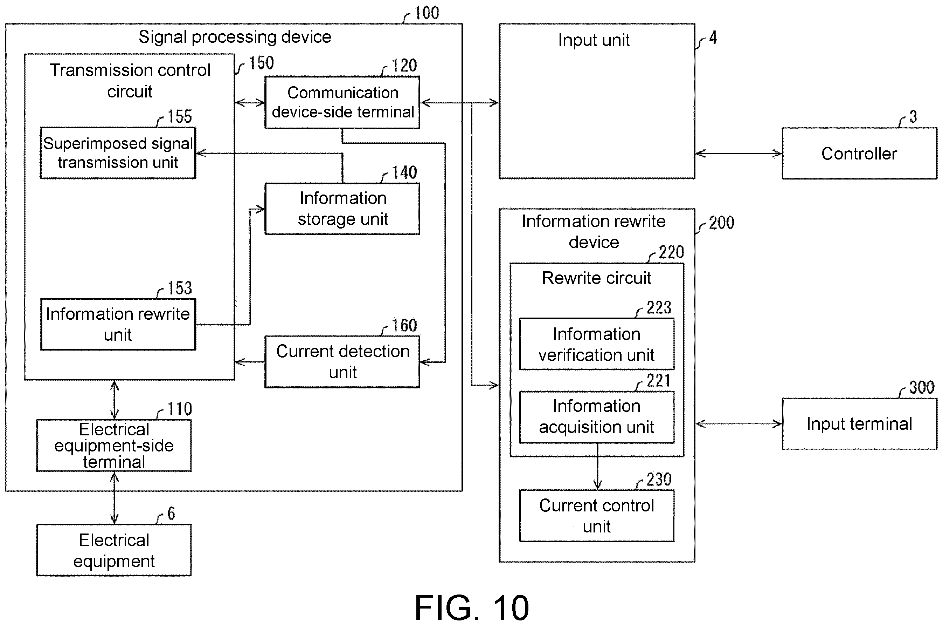

Fig. 10 is a block diagram illustrating configurations of the signal processing device 100 and the information rewrite device 200 according to an aspect of the present disclosure.

Although a basic configuration of the signal processing device 100 is the same as that in the aforementioned configuration example, a part of the configuration is different. The signal processing device 100 includes a current detection unit 160 instead of the light receiving unit 130 and the monitoring unit 151.

The current detection unit 160 is connected to the input unit 4 or the information rewrite device 200 and can detect a current value of a current signal supplied from a signal line used to transmit and received superimposed signals. Specifically, the current detection unit 160 can detect a current value of a current signal input to a communication device-side terminal 120 and can transmit the detection result to the transmission control circuit 150.

The transmission control circuit 150 can rewrite information using the information rewrite unit 153 on the basis of the detection result of the current value obtained by the current detection unit 160. Specifically, in a case in which a variation pattern of the current value of the current signal received by the current detection unit 160 from the input unit 4 or the information rewrite device 200 indicates an information rewriting instruction, the transmission control circuit 150 executes rewriting of the information based on the current signal. In the following description, the current signal indicated by the information to be rewritten by variations in current value will be referred to as a rewriting current signal. The information rewrite unit 153 is different from that in the aforementioned configuration example in that the information stored in the information storage unit 140 is rewritten on the basis of the rewriting current signal.

The current value of the rewriting current signal may be in any range of a value that can be distinguished from other current signals. If an output signal received from the electrical equipment 6 is an ON/OFF signal, and in a case in which a current value that is higher than a current value in an ON signal of the output signal is detected by the current detection unit 160, for example, the information rewrite unit 153 may recognize variations in current value as the rewriting current signal.

Although the basic configuration of the information rewrite device 200 is the same as that in the aforementioned configuration example, a part of the configuration is different. The information rewrite device 200 includes a current control unit 230 instead of the light projecting unit 210.

The current control unit 230 can generate the rewriting current signal in accordance with the predetermined information input from the information acquisition unit 221 and transmit the generated rewriting current signal to the signal processing device 100. The current control unit 230 may generate the rewriting current signal using a current value that is higher than the current value in the ON signal of the output signal of the electrical equipment 6, for example.

### (Circuit configurations of signal processing device and information rewrite device)

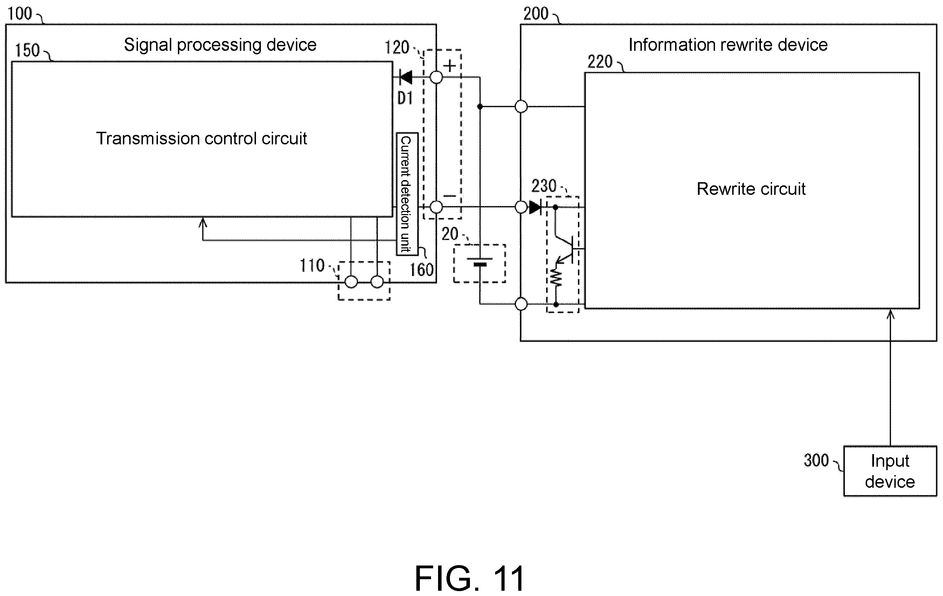

Fig. 11 is a circuit diagram illustrating configurations of the signal processing device 100 and the information rewrite device 200 according to an aspect of the present disclosure. Note that in the following description, description of items that have already been described in Fig. 5 will be omitted.

The signal processing device 100 includes a current detection unit 160 between the - side of the communication device-side terminal 120 and the transmission control circuit 150. The current detection unit 160 is configured of a resistor or an operation amplifier, for example, and can perform, using the operation amplifier, amplification and output adjustment on a signal indicating the current value of the current signal detected using the resistor and then output the result to the transmission control circuit 150.

In a case in which the current value of the current signal from the current detection unit 160 is a current value that is higher than the current value in the ON signal of the output signal of the electrical equipment 6, for example, the transmission control circuit 150 determines that the current signal is the rewriting current signal. In a case in which it is determined that the transmission control circuit 150 determines that the current signal is the rewriting current signal, the information rewrite unit 153 rewrites the information stored in the information storage unit 140 on the basis of the rewriting current signal.

In the information rewrite device 200, the current control unit 230 can be realized by combining a transistor and a resistor as illustrated in the drawing. In a case in which the current control unit 230 is configured as illustrated in the drawing, the current control unit 230 can generate the rewriting current signal by switching ON/OFF of the transistor in accordance with information received by the information acquisition unit 221 of the rewrite circuit 220 from the input terminal 300, for example.

### (Overview of rewriting current signal)

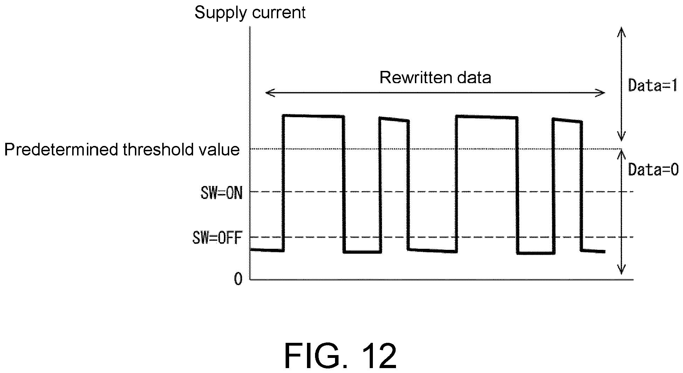

Fig. 12 is a schematic view illustrating an overview of the rewriting current signal. In the illustrated example, "supplied current" of the vertical axis represents a current value of the rewriting current signal supplied from the information rewrite device 200 to the signal processing device 100. Also, "SW = OFF" corresponds to the range L of the superimposed signal in Fig. 4, and "SW = ON" corresponds to the range H of the superimposed signal in Fig. 4. "Predetermined threshold value" is a value that is sufficiently large as compared with the range H of the superimposed signal.

In the drawing, "Data = 0" and "Data = 1" indicate ranges of binary values converted by the current detection unit 160 on the basis of the current value. In other words, in a case in which the current value of the rewriting current signal is between "0" and "predetermined threshold value", the current detection unit 160 converts the current value into the binary value "0" and transmits the binary value to the transmission control circuit 150. On the other hand, in a case in which the current value of the rewriting current signal is greater than "predetermined threshold value", the current detection unit 160 converts the current value into the binary value "1" and transmits the binary value to the transmission control circuit 150. In this manner, the information rewrite unit 153 of the transmission control circuit 150 can rewrite the information stored in the information storage unit 140 using the binary value obtained by converting the current value of the rewriting current signal.

Although "predetermined threshold value" is illustrated as a value that is sufficiently large as compared with the range H of the superimposed signal in Fig. 12, "predetermined threshold value" is not limited thereto. If the current detection unit 160 can recognize the range H and the range L of the superimposed signal, that is, which of ON and OFF the switch of the electrical equipment 6 is, for example, "predetermined threshold value" may be different in accordance with a state of the switch of the electrical equipment 6.

Specifically, the signal processing device 100 does not detect a current corresponding to the range L as the superimposed signal when the signal processing device 100 is transmitting or receiving an output signal that is an OFF signal for a reason that the switch of the electrical equipment 6 is OFF or the like. At this time, the current control unit 230 may generate the rewriting current signal using a current value that is higher than a current value in the OFF signal of the output signal. Then, in a case in which the current detection unit 160 detects the current value that is higher than the current value in the OFF signal of the output signal, the information rewrite unit 153 may recognize variations in current value as the rewriting current signal. In other words, in a case in which the switch of the electrical equipment 6 is OFF, and the current detection unit 160 recognizes that the superimposed signal is in the range L, for example, a value that is sufficiently larger than the range L but is smaller than the range H may be set as "predetermined threshold value". In this case, when the switch of the electrical equipment 6 is OFF, it is possible to set the current value of the rewriting current signal to be lower than the current value when the switch is ON.

### (Specific example of rewriting and verification of information)

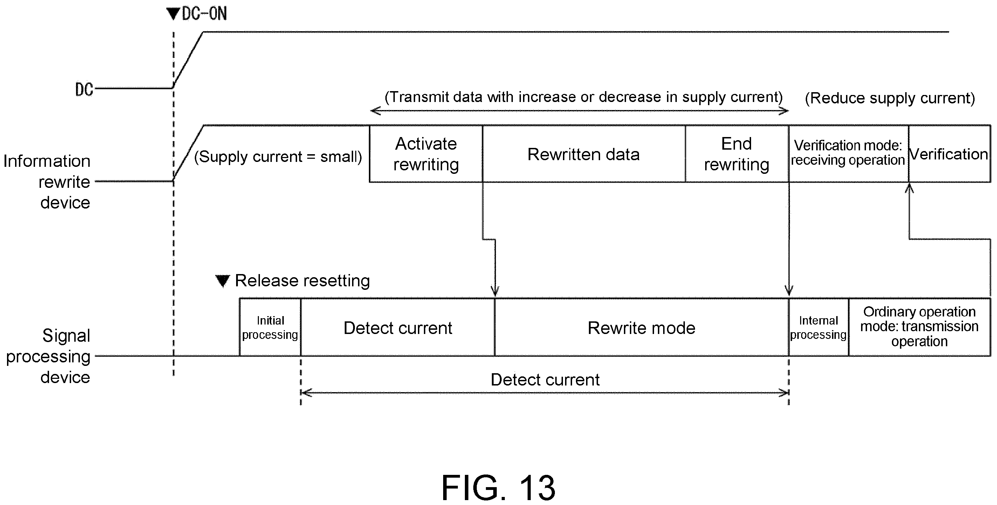

Fig. 13 is a diagram illustrating a specific example of rewriting and verification of information using the signal processing device 100 and the information rewrite device 200. Note that in the following description, it is assumed that information to be rewritten has already been input to the information rewrite device 200 in advance using the input terminal 300 and description of items with the same names as those in Fig. 6 will be omitted.

First, if the power source 20 is activated, then the transmission control circuit 150 of the signal processing device 100 releases a reset state, performs initial processing, and then operates in "current detection". Here, "current detection" is an operation mode in which the current detection unit 160 detects a current value of a current signal.

On the other hand, the information rewrite device 200 performs control using the current control unit 230 such that the current value of the current signal to be supplied to the signal processing device 100 decreases immediately after the activation of the power source 20. Thereafter, the information rewrite device 200 performs control using the current control unit 230 such that the current value of the current signal to be supplied to the signal processing device 100 is equal to or greater than a predetermined threshold value and transmits the current signal corresponding to the rewriting activation instruction to the signal processing device 100. After the transmission of the current signal corresponding to the rewriting activation instruction, the information rewrite device 200 transmits information to be rewritten in "rewritten data" as a rewriting current signal indicated by an increase or a decrease in current value. After the transmission of the rewriting current signal in accordance with the information to be rewritten, the information rewrite device 200 transmits a current signal corresponding to a rewriting end instruction to the signal processing device 100 in "end rewriting".

If the current detection unit 160 detects a current value that is equal to or greater than the predetermined threshold value during an operation in "detect current", then the signal processing device 100 moves on to "rewrite mode". Then, the information rewrite unit 153 rewrites the information in the information storage unit 140 on the basis of the rewriting current signal received from the information rewrite device 200 during the operation in "rewrite mode". Thereafter, if the rewriting end instruction is received, then the information rewrite device 200 ends "rewrite mode", performs predetermined processing in "internal processing", and shifts the operation mode to "ordinary operation mode: transmission operation". Operations of the signal processing device 100 in "ordinary operation mode: transmission operation" are the same as the details described above using Fig. 6. In this manner, the signal processing device 100 can rewrite the information on the basis of the rewriting current signal.

### (Flow of processing)

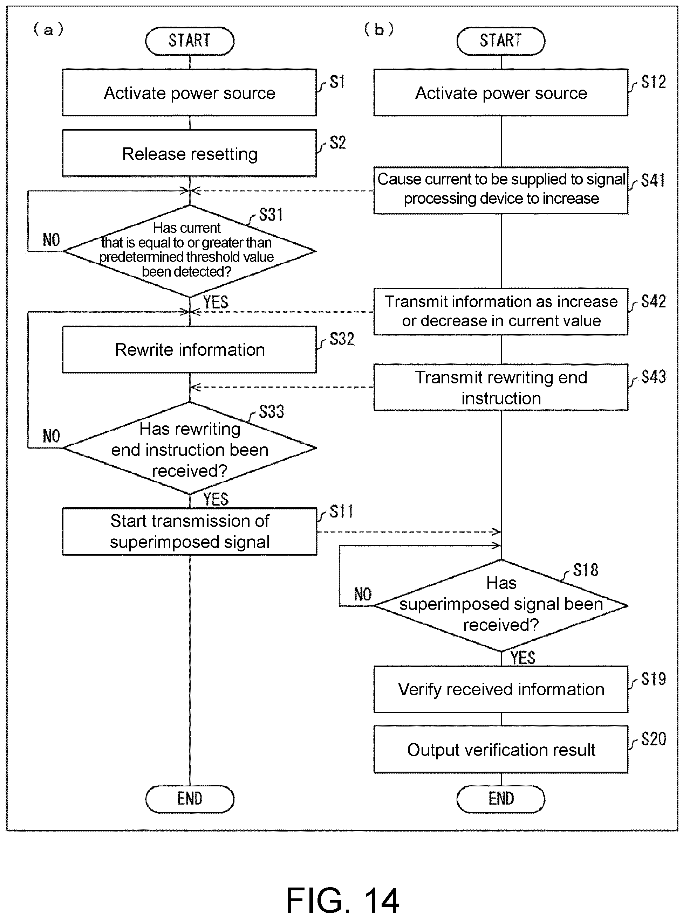

Each diagram in Fig. 14 is a flow diagram illustrating an example of a flow of processing executed by the signal processing device 100 and the information rewrite device 200 according to an aspect of the present disclosure. (a) of Fig. 14 illustrates a flow diagram of the signal processing device 100, and (b) of Fig. 14 illustrates a flow diagram of the information rewrite device 200. Note that description of the same processing as that in (a) and (b) of Fig. 7 will be omitted in the following description.

First, the flow diagram of the signal processing device 100 will be described using (a) of Fig. 14. The signal processing device 100 executes the processing in S1 and S2, then starts detection of a current value of a current signal using the current detection unit 160, and determines whether or not a current that is equal to or greater than a predetermined threshold value has been detected (S31). If a current value of a current signal to be supplied to the signal processing device 100 increases through processing in S41, which will be described later, then the current detection unit 160 detects the current that is equal to or greater than the predetermined threshold value (YES in S31).

After the current detection unit 160 detects the current that is equal to or greater than the predetermined threshold value in S31, the information rewrite device 200 transmits information to be rewritten as an increase or a decrease in current value through processing in S42, which will be described later. The information rewrite unit 153 of the transmission control circuit 150 rewrites the information in the information storage unit 140 on the basis of the detection result of the current detection unit 160 regarding the increase or the decrease in current value (S32). Thereafter, the current detection unit 160 determines whether or not a current signal corresponding to the rewriting end instruction has been received from the information rewrite device 200 (S33). In a case in which it is determined that the current signal has been detected, the transmission control circuit 150 ends the rewriting of the information and starts transmission of a superimposed signal using the superimposed signal transmission unit 155 (S11).

The signal processing device 100 can receive the information to be rewritten via a signal line connected to the input unit 4 through the processing described hitherto. Therefore, there is no need to provide a special configuration to receive the information to be rewritten. Also, since the current signal with a current value that is higher than the current value in the ON signal of the output signal of the electrical equipment 6 is selectively used as the rewriting current signal, it is possible to clearly distinguish the output signal from the rewriting current signal.

Next, the flow diagram of the information rewrite device 200 will be described using (b) of Fig. 14. The information rewrite device 200 executes the processing in S12 and then causes the current to be supplied to the signal processing device 100 to increase using the current control unit 230 (S41). Thereafter, the current control unit 230 generates a rewriting current signal including information that has already been acquired by the information acquisition unit 221 and that is to be rewritten as an increase or a decrease in current value and transmits the rewriting current signal (S42). If the transmission of the information to be rewritten is completed, then the current control unit 230 generates a current signal indicating a rewriting end instruction and transmits the current signal to the signal processing device 100 (S43). After S43, the information rewrite device 200 executes processing in S18 to S20 and verifies the predetermined information indicated by the data signal included in the superimposed signal transmitted from the signal processing device 100 in the processing in S11.

The information rewrite device 200 can rewrite the information stored in the information storage unit 140 with the rewriting current signal transmitted via the signal line included in the signal processing device 100 through the processing described hitherto. Also, since the current signal with a current value that is higher than the current value in the ON signal of the output signal of the electrical equipment 6 is selectively used as the rewriting current signal, the signal processing device 100 can clearly distinguish the output signal from the rewriting current signal.

### §6. Modification example 3

**In** the aforementioned modification example 2, the communication between the signal processing device 100 and the information rewrite device 200 is performed using a communication cable that is connected to the communication device-side terminal 120 and that can transmit and receive superimposed signals. Since the input unit 4 can be connected to the signal processing device 100 with the communication cable, the various functions included in the information rewrite device 200 in the modification example 2 may be incorporated in the input unit 4, for example.

### (Configurations of signal processing device and input unit)

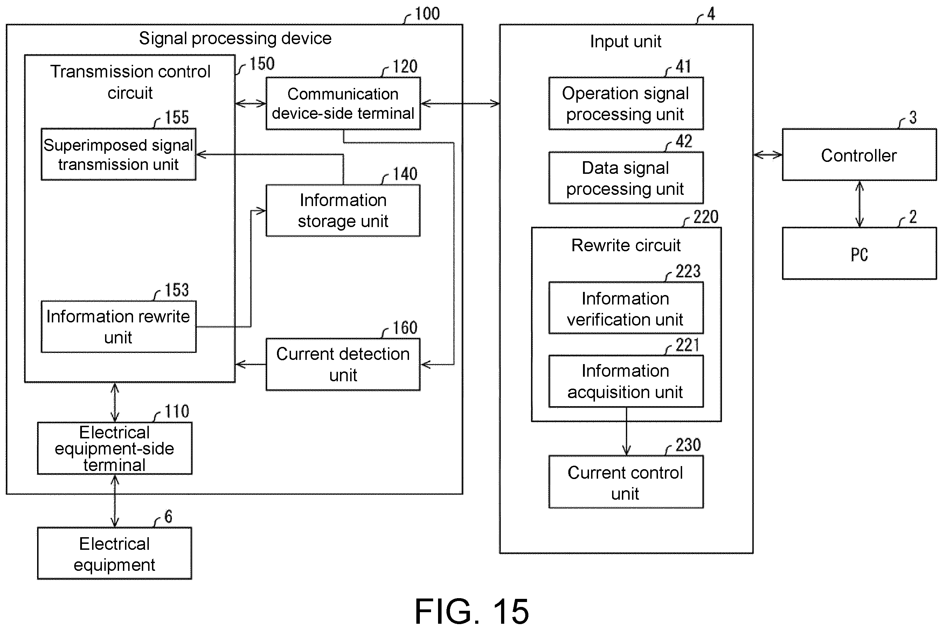

Fig. 15 is a block diagram illustrating configurations of the signal processing device 100 and the input unit 4 according to an aspect of the present disclosure. Note that since the configuration of the signal processing device 100 is the same as the configuration illustrated in Fig. 10, description thereof will be omitted.

The input unit 4 further includes a series of configurations included in the information rewrite device 200 in the modification example 2 in addition to the configuration described in the configuration example. In other words, the input unit 4 includes the rewrite circuit 220 and the current control unit 230, and the rewrite circuit 220 includes the information acquisition unit 221 and the information verification unit 223. The information acquisition unit 221 is different from that in the modification example 2 in that the predetermined information related to the electrical equipment 6 is acquired from the PC 2 connected to the input unit 4 via the controller 3.

Also, the input unit 4 includes an operation signal processing unit 41 and a data signal processing unit 42. The operation signal processing unit 41 can detect an output signal (operation signal) from a superimposed signal. The operation signal processing unit 41 corresponds to the input circuit 33 in Fig. 2 and transmits the detected output signal to a control circuit (corresponding to the unit control circuit 36 in Fig. 2), which is not illustrated in the drawing.

The data signal processing unit 42 can extract a data signal from a superimposed signal. The data signal processing unit 42 corresponds to the extraction circuit 34 in Fig. 2, performs error detection on the extracted data signal as needed, and then transmits the data signal to the control circuit (corresponding to the unit control circuit 36 in Fig. 2), which is not illustrated.

### (Circuit configurations of signal processing device and input unit)

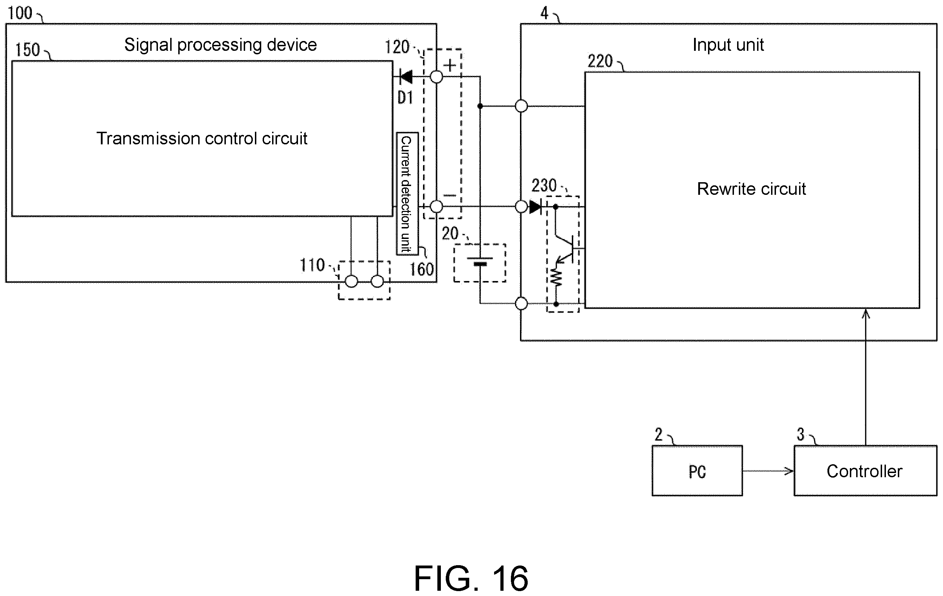

Fig. 16 is a circuit diagram illustrating configurations of the signal processing device 100 and the input unit 4 according to an aspect of the present disclosure. The circuit configuration of the signal processing device 100 is the same as that in Fig. 11, and the circuit configuration of the input unit 4 is the same as that of the information rewrite device 200 in Fig. 11. The rewrite circuit 220 of the input unit 4 receives predetermined information input from the PC 2 via the controller 3.

### (Flow of processing)

Since processing executed by the signal processing device 100 and the input unit 4 according to an aspect of the present disclosure is the same as the details illustrated in (a) and (b) of Fig. 14 other than that the input unit 4 is used instead of the information rewrite device 200, the description thereof will be omitted.

In this manner, the communication device that performs detection of an output signal and extraction of a superimposed signal can also function as the information rewrite device.

### §7. Modification example 4

A superimposed signal includes a current value ranging in the range H and the range L as described above using Fig. 4. Therefore, in a case in which the input unit 4 that does not support superimposed signals is connected to the signal processing device 100, the input unit 4 receives a superimposed signal as an output signal, it is thus not possible to appropriately determine the range H and the range L, and there is a concern of erroneous detection.

As means for preventing erroneous detection, it is considered that the signal processing device 100 determines whether or not the input unit 4 supports communication using superimposed signals on the basis of a current value of a current supplied from the input unit 4, for example. If it is possible to detect whether or not the input unit 4 supports the communication using superimposed signals, then the signal processing device 100 can cause the operation mode of transmitting a superimposed signal and an operation mode of transmitting only an output signal, for example, to operate in a switched manner.

However, since whether or not a signal is a rewriting current signal is determined on the basis of the current value in the modification example 3, it is necessary to execute two kinds of processing, namely processing of "determining whether or not there is compatibility with communication using superimposed signal" and of "converting the current signal into information to be rewritten if the signal is a rewriting current signal" in regard to the current signal to achieve both of them.

### (Configurations of signal processing device and input unit)

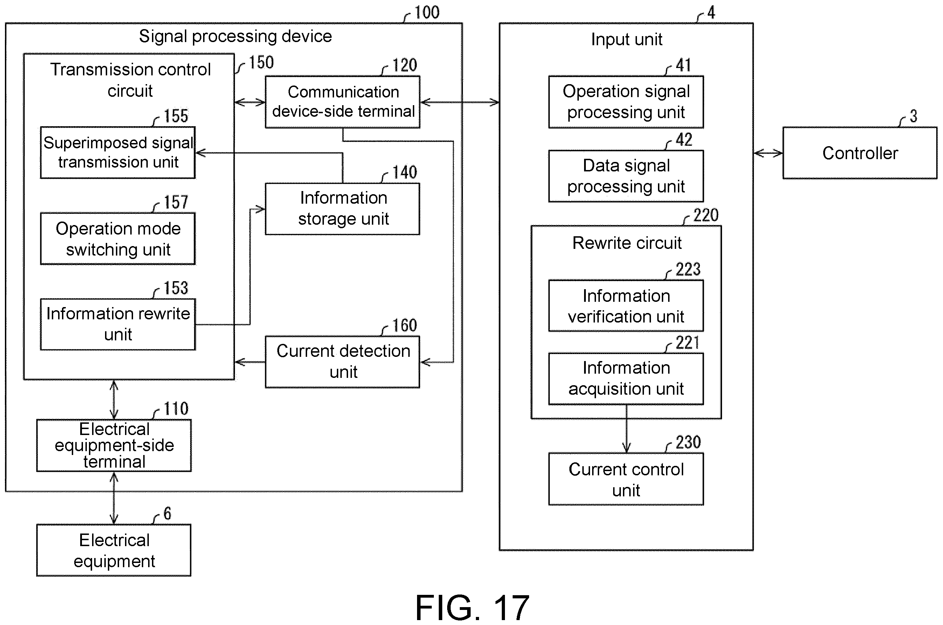

Fig. 17 is a block diagram illustrating configurations of the signal processing device 100 and the input unit 4 according to an aspect of the present disclosure. Note that the configuration of the input unit 4 is the same as the configuration illustrated in Fig. 15.

The signal processing device 100 further includes an operation mode switching unit 157 in addition to the configuration described in the modification example 3. The signal processing device 100 can operate while switching an ordinary operation mode in which the superimposed signal transmission unit 155 transmits a superimposed signal and a low current consumption mode in which no superimposed signal is transmitted. The operation mode switching unit 157 can switch the operation mode of the signal processing device 100 between the ordinary operation mode and the low current consumption mode on the basis of a detection result obtained by the current detection unit 160. The operation mode switching unit 157 can switch the operation mode of the signal processing device 100 from the low current consumption mode to the ordinary operation mode in a case in which a magnitude, a variation pattern, or the like of the current value detected by the current detection unit 160 is an instruction for switching to the ordinary operation mode, for example.

Although a basic configuration of the input unit 4 is the same as that in the modification example 3, a part of the configuration is different. In the input unit 4, the current control unit 230 can transmit information to be rewritten as a rewriting current signal similarly to the modification example 3 and transmit a current signal corresponding to a switching instruction for switching the operation mode of the signal processing device 100 between the ordinary operation mode and the low current consumption mode. The input unit 4 can provide a notification that the input unit 4 itself supports superimposed signals to the signal processing device 100 through the transmission of the current signal corresponding to the switching instruction. Therefore, it is possible to cause the signal processing device 100 to operate in the operation mode switched to the ordinary operation mode and to receive a superimposed signal.

### (Specific example of rewriting instruction and switching instruction)

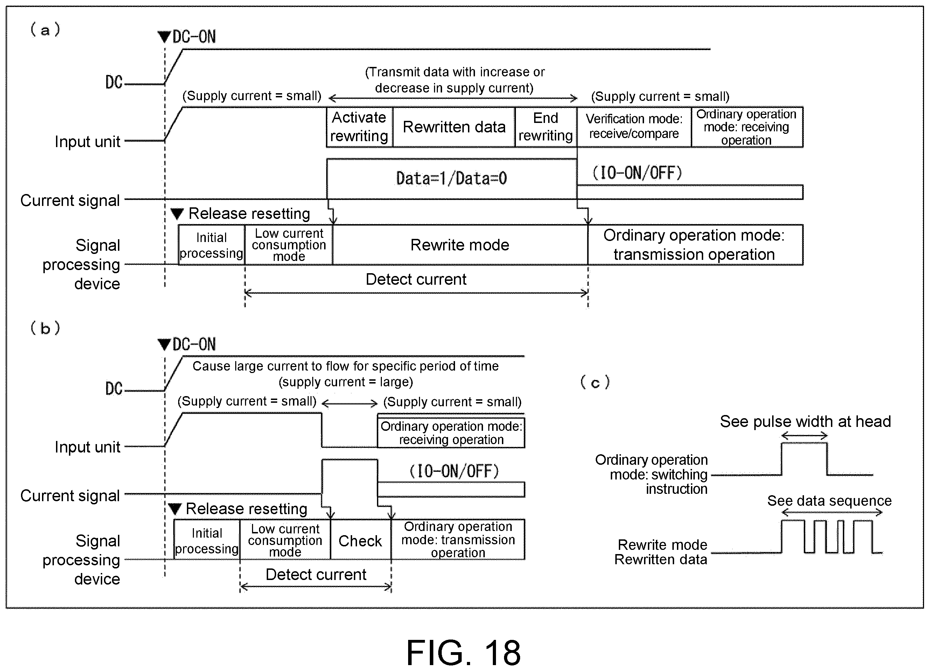

Each diagram of Fig. 18 is a diagram illustrating a specific example of rewriting of information and switching of the operation mode using the signal processing device 100 and the input unit 4. (a) of Fig. 18 illustrates rewriting of information, and (b) of Fig. 18 illustrates switching of the operation mode. (c) of Fig. 18 illustrates a specific example of a switching instruction and rewritten data.

(a) of Fig. 18 is basically the same as Fig. 13 other than that the input unit 4 is used instead of the information rewrite device 200. Note that "verification mode: receive/compare" is an operation mode in which the input unit 4 receives and verifies the superimposed signal transmitted from the signal processing device 100, and "low current consumption mode represents that the operation mode is the aforementioned low current consumption mode.

If the current detection unit 160 detects a current signal corresponding to a rewriting activation instruction during an operation in "low current consumption mode" after initial processing, then the signal processing device 100 shifts the operation mode to "rewrite mode". Note that since the superimposed signal is not transmitted during the operation in "rewrite mode", the "rewrite mode" is a type of low current consumption mode.

The signal processing device 100 rewrites the information storage unit 140 using the information rewrite unit 153 on the basis of the rewriting current signal detected during the operation in "rewrite mode", then ends "rewrite mode" on the basis of a rewriting end instruction, and shifts the operation mode to "ordinary operation mode: transmission operation". In other words, the operation mode switching unit 157 can switch the operation mode to "ordinary operation mode" if the rewriting end instruction is detected.

The signal processing device 100 generates a data signal using predetermined information after rewriting that is stored in the information storage unit 140 in "ordinary operation mode: transmission operation" and transmits a superimposed signal including the data signal to the information rewrite device 200 using the superimposed signal transmission unit 155.

On the other hand, the input unit 4 respectively transmits a rewriting activation instruction, rewritten data, and a rewriting end instruction as current signals similarly to the information rewrite device 200 in Fig. 13 and then performs reception and verification of the superimposed signal in "verification mode: receive/compare". If there are no problems in the verification result, then the input unit 4 operates in "ordinary operation mode: receiving operation" and continues the communication using the superimposed signal.

In (b) of Fig/ 18, the switching instruction from the low current consumption mode to the ordinary operation mode that is transmitted as a current signal by the input unit 4 to the signal processing device 100 corresponds to supply of a large current for a specific period of time. In other words, the input unit 4 supplies a large current for a specific period of time as a switching instruction when the signal processing device 100 is operating in the low current consumption mode. The signal processing device 100 determines whether or not the current signal corresponds to the switching instruction in "check", and as a result of determining that the current signal corresponds to the switching instruction, the operation mode switching unit 157 switches the operation mode to the ordinary operation mode to start the transmission of the superimposed signal. After the input unit 4 supplies the large current corresponding to the switching instruction, the input unit 4 operates in "ordinary operation mode: receiving operation" and starts reception of the superimposed signal.

(c) of Fig. 18 is a specific example of the switching instruction from the low current consumption mode to the ordinary operation mode that is transmitted as a current signal by the input unit 4 and the rewriting current signal that is received as rewritten data when the signal processing device 100 is operating in "rewrite mode". As described above using (c) of Fig. 18, the switching instruction is evaluated depending on a continuation time of the current value, for example. In other words, in a case in which the current detection unit 160 detects that the pulse width at the head of the current signal is equal to or greater than a predetermined pulse width, the signal processing device 100 determines that the current signal is a switching instruction.

On the other hand, the rewritten data is evaluated depending on a data sequence as a combination of variations in current value as binary values as described above using Fig. 12. Specifically, in a case in which the rewriting current signal detected by the current detection unit 160 is a predetermined data sequence, the signal processing device 100 during an operation in the low current consumption mode may move on to the rewrite mode in which the information rewrite unit 153 rewrites the information stored in the information storage unit 140. Conversely, the information rewrite device 200 may supply the rewriting current signal that is a predetermined data sequence to the signal processing device 100 during an operation in the low current consumption mode and then supply the rewriting current signal in accordance with information to be rewritten.

If the switching instruction is evaluated in this manner, it is possible to distinguish the current supply for switching the operation mode and the rewriting current signal in the signal processing device 100.

### (Flow of processing performed by signal processing device)

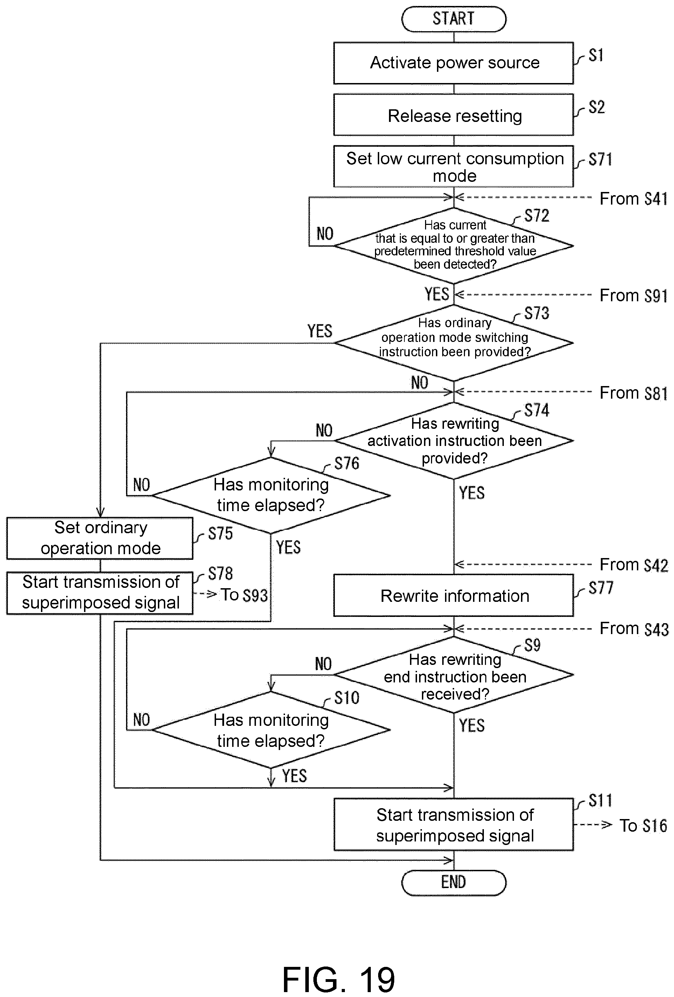

Fig. 19 is a flow diagram illustrating an example of a flow of processing executed by the signal processing device 100 according to an aspect of the present disclosure. Note that description of the same processing as that in (a) of Fig. 7 will be omitted in the following description.

After the signal processing device 100 executes the processing in S1 and S2, the operation mode switching unit 157 sets the operation mode of the signal processing device 100 to the low current consumption mode (S71). After S71, the current detection unit 160 starts to detect that a current with a current value that is equal to or greater than a predetermined threshold value has been supplied from the input unit 4 (S72). If the current supplied from the input unit 4 increases through the processing in S41, then the current detection unit 160 detects that the current with the current value that is equal to or greater than the predetermined threshold value has been supplied from the input unit 4 (YES in S72), and the processing proceeds to S73.

In S73, the signal processing device 100 determines whether or not the current detection unit 160 has detected a switching instruction to the ordinary operation mode by checking whether or not the pulse width of the current signal is equal to or greater than the predetermined pulse width (S73). In a case in which it is determined that no switching instruction has been detected (NO in S73), the processing proceeds to S74. On the other hand, in a case in which it is determined that the switching instruction has been detected (YES in S73), the operation mode switching unit 157 sets the operation mode of the signal processing device 100 to the ordinary operation mode (S75), and the superimposed signal transmission unit 155 starts transmission of the superimposed signal (S78). Thereafter, the series of processes are ended.

In S74, the signal processing device 100 further determines whether or not the current detection unit 160 has received a rewriting activation instruction (S74). In a case in which it is determined that no rewriting activation instruction has been received (NO in S74), the signal processing device 100 determines whether or not a preset monitoring time has elapsed (S76). In a case in which it is determined that the monitoring time has not been elapsed (NO in S76), the processing proceeds to S74, and the processing in S74 and S76 is executed again. On the other hand, in a case in which it is determined that the monitoring time has elapsed (YES in S76), the signal processing device 100 ends reception of the rewriting instruction related to the predetermined information, and the processing proceeds to S11.

If the rewriting activation instruction is transmitted with a current pulse from the input unit 4 through processing in S81, which will be described later, then the current detection unit 160 detects the instruction, and the signal processing device 100 determines that the current detection unit 160 has received the rewriting activation instruction (YES in S74). Then, the information rewrite unit 153 rewrites the information in the information storage unit 140 on the basis of the rewriting current signal that has been transmitted from the input unit 4 through the processing in S42 and that indicates information to be rewritten as an increase or a decrease in current value (S77). Thereafter, the signal processing device 100 executes the processing in S9 to S11 and then ends the series of processes.

The signal processing device 100 can perform switching to the ordinary operation mode if the current that is equal to or greater than the predetermined threshold value is detected with a predetermined pulse width or greater during the operation in the low current consumption mode, through the aforementioned processing. Here, it is possible to employ a configuration in which the input unit 4 supplies a current that is equal to or greater than the predetermined threshold value to the signal processing device 100 in a case in which the input unit 4 connected to the signal processing device 100 is an input unit that supports reception of superimposed signals. In this case, the signal processing device 100 can operate in different operation modes in a case in which the signal processing device 100 is connected to an input unit communication device that supports superimposed signals and a in a case in which the signal processing device 100 is connected to an input unit that does not support superimposed signals. Therefore, it is possible to provide a convenient signal processing device 100 that operates in operation modes switched in accordance with the type of the input unit to which the signal processing device 100 is connected. Also, since the operation mode is switched to the ordinary operation mode if the current that is equal to or greater than the predetermined threshold value is detected with a predetermined pulse width or greater, it is possible to achieve distinction from the rewriting current signal.

### (Flow of processing performed by input unit to transmit rewritten data)

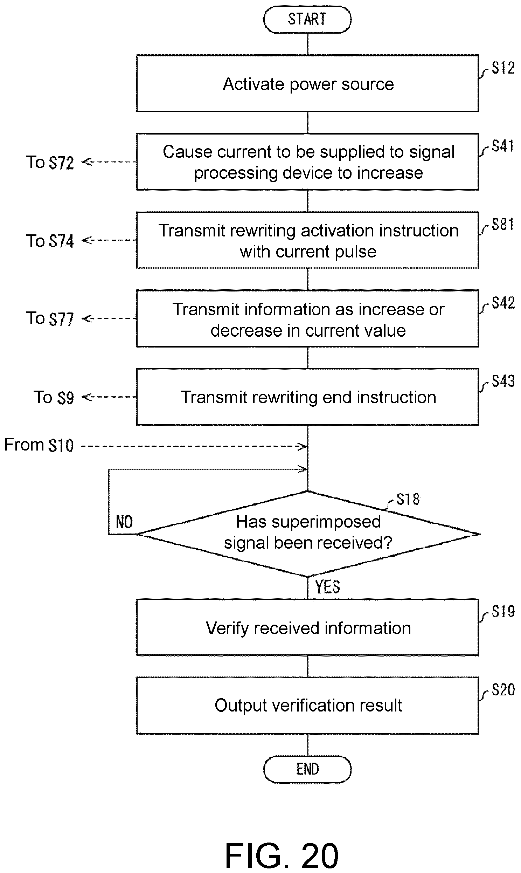

Fig. 20 is a flow diagram illustrating an example of a flow of processing executed by the input unit 4 according to an aspect of the present disclosure. Note that description of the same processing as that in (b) of Fig. 14 will be omitted in the following description.

The input unit 4 transmits a current pulse corresponding to the rewriting activation instruction to the signal processing device 100 under control of the current control unit 230 after the processing in S12 and S41 (S81). Thereafter, the processing in S42 and S43 and S18 to S20 is executed, and the series of processes are ended.

The input unit 4 can rewrite the information stored in the information storage unit 140 with the rewriting current signal transmitted via the signal line included in the signal processing device 100 through the aforementioned processing.

### (Flow of processing performed by input unit to transmit switching instruction)

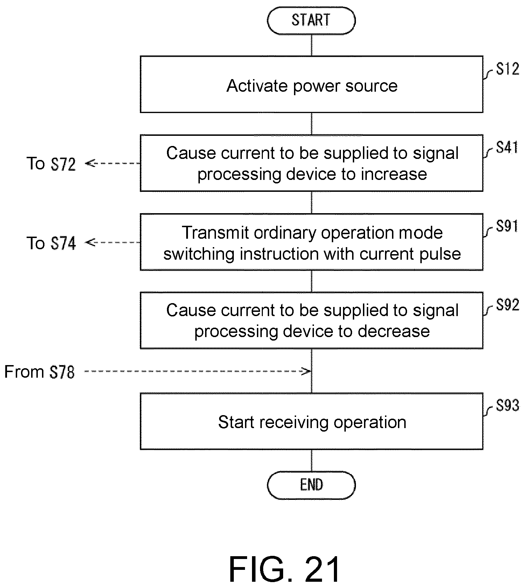

Fig. 21 is a flow diagram illustrating an example of a flow of processing executed by the input unit 4 according to an aspect of the present disclosure. Note that description of the same processing as that in (b) of Fig. 14 will be omitted in the following description.

The input unit 4 transmits a current pulse corresponding to the switching instruction to the ordinary operation mode to the signal processing device 100 under control of the current control unit 230 after the processing in S12 and S41 (S91). Thereafter, the input unit 4 controls the current control unit 230 and causes the current control unit 230 to reduce the current to be supplied to the signal processing device 100 (S92) and then starts an operation of receiving the superimposed signal transmitted from the signal processing device 100 (S93).

The input unit 4 can provide a notification that the input unit 4 itself is an input unit that supports superimposed signals to the signal processing device 100 through the aforementioned processing. Therefore, it is possible to cause the signal processing device 100 to operate in the ordinary operation mode to receive the superimposed signal. Also, since the signal processing device 100 performs switching to the ordinary operation mode if the current that is equal to or greater than the predetermined threshold value is detected with a predetermined pulse width or greater, it is possible to cause the signal processing device 100 to distinguish the current supply for switching the mode and the rewriting current signal.

### [Implementation example using software]

Control blocks of the signal processing device 100, the information rewrite device 200, and the input unit 4 may be realized by logical circuits (hardware) formed into integrated circuits (IC chips and the like) or may be realized by software.

In the latter case, the signal processing device 100, the information rewrite device 200, and the input unit 4 include a computer that executes commands for a program that is software for realizing each function. The computer includes, for example, one or more processors and also includes a computer-readable recording medium storing the program therein. Then, the objective of the present invention is achieved by the processor reading the program from the recording medium and executing the program in the computer. As the processor, it is possible to use a central processing unit (CPU), for example. As the recording medium, it is possible to use a "non-transitory tangible medium" such as a read only memory (ROM), or a tape, a disk, a card, a semiconductor memory, a programmable logical circuit, or the like. Also, a random access memory (RAM) for deploying the program therein may further be included. Moreover, the program may be supplied to the computer via an arbitrary transmission medium (a communication network, a broadcasting wave, or the like) that can transmit the program. Note that an aspect of the present invention may be realized in the form of data signals incorporated in carrier waves, in which the program is implemented by electronic transmission.

### [Reference Signs List]

100 Signal processing device
130 Light receiving unit
140 Information storage unit
150 Transmission control circuit
151 Monitoring unit
153 Information rewrite unit
155 Superimposed signal transmission unit
157 Operation mode switching unit
160 Current detection unit
200 Information rewrite device
210 Light projecting unit
220 Rewrite circuit
221 Information acquisition unit
223 Information verification unit
4 Input unit
41 Operation signal processing unit
42 Data signal processing unit

## Claims

1. A signal processing device (100) comprising:
a superimposed signal transmission unit (155) configured to transmit an operation signal in accordance with a state of an operation element (13) to a communication device (4, 200) external to the signal processing device, and to transmit a superimposed signal to the communication device (4, 200), wherein the superimposed signal is generated by superimposing a data signal indicating predetermined information on the operation signal transmitted to the communication device (4, 200);
an information storage unit (140) configured to store the predetermined information; **characterized in** further comprising:
an information rewrite unit (153) configured to overwrite the predetermined information stored in the information storage unit (140) based on an external instruction input, wherein the information rewrite unit (153) is configured to overwrite the predetermined information in the information storage unit (140) while the superimposed signal transmission unit (150) transmits the superimposed signal to the communication device (4, 200).

2. The signal processing device (100) according to claim 1, further comprising:
an electrical equipment-side terminal (110) configured to transmit or receive the operation signal to or from external electrical equipment provided with the operation element; and
a communication device-side terminal (120) configured to transmit or receive the operation signal to or from the communication device (4, 200).

3. The signal processing device (100) according to claim 1 or 2, further comprising:
a light receiving unit (130) configured to receive an optical signal from outside,
wherein the information rewrite unit (153) is configured to overwrite the information stored in the information storage unit (140) based on the optical signal received by the light receiving unit (130).

4. The signal processing device (100) according to claim 3, further comprising:
a monitoring unit (151) configured to monitor reception of the optical signal,
wherein in a case in which the optical signal is detected by the monitoring unit (151), the superimposed signal transmission unit (155) does not transmit the superimposed signal, and the information rewrite unit (153) rewrites the information stored in the information storage unit (140) based on the optical signal, and
after rewriting processing performed by the information rewrite unit (153) is completed, the superimposed signal transmission unit (155) transmits the superimposed signal.

5. The signal processing device (100) according to claim 1 or 2, further comprising:
a current detection unit (160) configured to detect a current value supplied from a signal line connected to the communication device (4, 200),
wherein the information rewrite unit (153) rewrites the predetermined information stored in the information storage unit (140) based on a rewriting current signal indicated by variations in current value detected by the current detection unit (160).

6. The signal processing device (100) according to claim 5,
wherein the operation signal is an ON/OFF signal, and
the information rewrite unit (153) recognizes variations in current value as the rewriting current signal in a case in which a current value that is higher than a current value in an ON signal of the operation signal is detected by the current detection unit (160).

7. The signal processing device (100) according to claim 6, wherein when the operation signal that is an OFF signal is being transmitted or received, the information rewrite unit (153) recognizes variations in current value as the rewriting current signal in a case in which a current value that is higher than a current value in an OFF signal of the operation signal is detected by the current value.

8. The signal processing device (100) according to any one of claims 5 to 7, further comprising:
an operation mode switching unit (157) configured to perform switching between an ordinary operation mode in which the superimposed signal is transmitted and a low current consumption mode in which the superimposed signal is not transmitted,
wherein the operation mode switching unit (157) performs switching to the ordinary operation mode in a case in which the current detection unit (160) detects a current that is equal to or greater than a predetermined threshold value at a predetermined pulse width or more in the low current consumption mode.

9. The signal processing device (100) according to claim 8, wherein in a case in which the rewriting current signal detected by the current detection unit (160) during an operation in the low current consumption mode is a predetermined data sequence, the information rewrite unit (153) is configured to move on to a rewrite mode in which the information stored in the information storage unit (140) is rewritten.

10. A communication system (1) comprising the signal processing device (100) according to claim 3 or 4 and the communication device (200), wherein the communication device (200) is configured to provide an instruction for rewriting the predetermined information stored in the information storage unit (140) to the signal processing device (100), the communication device (200) comprising:
an information acquisition unit (221) configured to acquire information to be rewritten; and
a light projecting unit (210) configured to project the optical signal in accordance with the information to the light receiving unit (130) included in the signal processing device (100).

11. A communication system (1) comprising the signal processing device (100) according to any of claims 5 to 9 and the communication device (200), wherein the communication device (200) is configured to provide an instruction for rewriting the predetermined information stored in the information storage unit (140) to the signal processing device (100), the communication device (200) comprising:
an information acquisition unit (221) configured to acquire information to be rewritten; and
a current control unit (230) configured to generate the rewriting current signal in accordance with the information.

12. A communication system (1) comprising the signal processing device (100) according to claim 6 and the communication device (200), wherein the communication device (200) is configured to provide an instruction for rewriting the predetermined information stored in the information storage unit (140) to the signal processing device (100), the communication device (200) comprising:
an information acquisition unit (221) configured to acquire information to be rewritten; and
a current control unit (230) configured to generate the rewriting current signal in accordance with the information,
wherein the operation signal is an ON/OFF signal, and
the current control unit (230) is configured to generate the rewriting current signal with a current value that is higher than a current value in an ON signal of the operation signal.

13. The communication system (1) according to claim 12, wherein when the signal processing device (100) is transmitting or receiving the operation signal that is an OFF signal, the current control unit (230) is configured to generate the rewriting current signal with a current value that is higher than a current value in the OFF signal of the operation signal.

14. The communication system (1) according to any one of claims 11 to 13, further comprising:
an operation signal processing unit (41) configured to detect an operation signal in accordance with a state of an operation element; and
a data signal processing unit (42) configured to extract a data signal from a superimposed signal in which the data signal indicating predetermined information is superimposed on the operation signal.

15. A communication system (1) comprising the signal processing device (100) according to claim 8 and the communication device (200), wherein the communication device (200) configured to provide an instruction for rewriting the predetermined information stored in the information storage unit (140) to the signal processing device (100), the communication device (200) comprising:
an information acquisition unit (221) configured to acquire information to be rewritten; and
a current control unit (230) configured to generate the rewriting current signal in accordance with the information,
wherein the current control unit (230) is configured to supply a current to the signal processing device (100) such that a current with a current value that is equal to or greater than the predetermined threshold value flows at a predetermined pulse width after activation of the signal processing device (100).

16. The communication system (1) according to claim 15, wherein the current control unit (230) is configured to supply the rewriting current signal that is a predetermined data sequence to the signal processing device (100) which is operating in the low current consumption mode and is configured to then supply the rewriting current signal in accordance with information to be rewritten.

## Patentansprüche

1. Signalverarbeitungsvorrichtung (100), umfassend:
eine Überlagerungssignal-Übertragungseinheit (155), die konfiguriert ist, um an eine Kommunikationsvorrichtung (4, 200), die außerhalb zu der Signalverarbeitungsvorrichtung ist, ein Betriebssignal gemäß einem Zustand eines Betriebselements (13) zu übertragen, und um ein Überlagerungssignal an die Kommunikationsvorrichtung (4, 200) zu übertragen,
wobei das Überlagerungssignal durch Überlagern eines Datensignal erzeugt wird, das vorbestimmte Informationen über das Betriebssignal anzeigt, das an die Kommunikationsvorrichtung (4, 200) übertragenwird;
eine Informationsspeichereinheit (140), die konfiguriert ist, um die vorbestimmten Informationen zu speichern; **dadurch gekennzeichnet, dass** sie ferner umfasst:
eine Informationsumschreibeinheit (153), die konfiguriert ist, um basierend auf einer externen Befehlseingabe in der Informationsspeichereinheit (140) vorbestimmten gespeicherten Informationen umzuschreiben, wobei die Informationsumschreibeinheit (153), konfiguriert ist, um die vorbestimmten Informationen in der Informationsspeichereinheit (140) umzuschreiben, während die Überlagerungssignal-Übertragungseinheit (150) das Überlagerungssignal an die Kommunikationsvorrichtung (4, 200) überträgt.

2. Signalverarbeitungsvorrichtung (100) gemäß Anspruch 1, die ferner umfasst:
einen elektrischen Ausrüstungsseitigen Anschluss (110), der konfiguriert ist, um das Betriebssignal an eine externe elektrische Ausrüstung, die mit dem Bedienelement bereitgestellt wird, zu senden oder von dieser zu empfangen, und
ein Kommunikationsvorrichtungsseitiger Anschluss (120), der konfiguriert ist, um das Betriebssignal an die Kommunikationsvorrichtung (4, 200) zu senden oder von dieser zu empfangen.

3. Signalverarbeitungsvorrichtung (100) gemäß Anspruch 1 oder 2, ferner umfassend:
eine Lichtempfangseinheit (130), die konfiguriert ist, um ein optisches Signal von außen zu empfangen,
wobei die Informationsumschreibeinheit (153), die konfiguriert ist, um die Informationen, die in der Informationsspeichereinheit (140) gespeichert sind, basierend auf dem optischen Signal, empfangen von der Lichtempfangseinheit (130), umzuschreiben.

4. Signalverarbeitungsvorrichtung (100) gemäß Anspruch 3, ferner umfassend:
eine Überwachungseinheit (151), die konfiguriert ist, um Empfangen des optischen Signals zu überwachen,
wobei in einem Fall, in dem das optische Signal durch die Überwachungseinheit (151) erfasst wird, die Überlagerungssignal-Übertragungseinheit (155) das Überlagerungssignal nicht überträgt und die Informationsumschreibeinheit (153) die Informationen, gespeichert in der Informationsspeichereinheit (140), basierend auf dem optischen Signal umschreibt, und
nachdem eine Umschreibverarbeitung, durchgeführt durch die InformationsUmschreibeinheit (153), abgeschlossen ist, die Überlagerungssignal-Übertragungseinheit (155) das Überlagerungssignal überträgt.

5. Signalverarbeitungsvorrichtung (100) gemäß Anspruch 1 oder 2, die ferner umfasst:
eine Stromerfassungseinheit (160), die konfiguriert ist, um einen Stromwert zu erfassen, der von einer Signalleitung, die mit der Kommunikationsvorrichtung (4, 200) verbunden ist, zugeführt wird,
wobei die Informationsumschreibeinheit (153) die vorbestimmten Informationen, gespeichert in der Informationsspeichereinheit (140), basierend auf einem Umschreibstromsignal umschreibt, das durch Stromwertänderungen, erfasst von der Stromerfassungseinheit (160), angezeigt wird.

6. Signalverarbeitungsvorrichtung (100) gemäß Anspruch 5,
wobei das Betriebssignal ein EIN/AUS-Signal ist und
die Informationsumschreibeinheit (153) Stromwertänderungen als das Umschreibstromsignal in einem Fall erkennt, in dem ein Stromwert, der höher als ein Stromwert in einem EIN-Signal des Betriebssignals ist, durch die Stromerfassungseinheit (160) erfasst wird.

7. Signalverarbeitungsvorrichtung (100) gemäß Anspruch 6, wobei, wenn das Betriebssignal, das ein AUS-Signal ist, gesendet oder empfangen wird, die Informationsumschreibeinheit (153) Stromwertänderungen als das Umschreibstromsignal in einem Fall erkennt, in dem ein Stromwert, der höher als ein Stromwert in einem AUS-Signal des Betriebssignals ist, durch den Stromwert erfasst wird.

8. Signalverarbeitungsvorrichtung (100) gemäß einem der Ansprüche 5 bis 7, ferner umfassend:
eine Betriebsmodus-Umschalteinheit (157), die konfiguriert ist, um Umschalten zwischen einem gewöhnlichen Betriebsmodus, in der das Überlagerungssignal übertragen wird, und einem Modus mit niedrigem Stromverbrauch, in der das Überlagerungssignal nicht übertragen wird, durchführt,
wobei die Modus-Umschalteinheit (157) Umschalten auf den gewöhnlichen Betriebsmodus in einem Fall durchführt, in dem die Stromerfassungseinheit (160) einen Strom erfasst, der gleich oder größer als ein vorbestimmter Schwellenwert bei einer vorbestimmten Impulsbreite oder mehr in dem Modus mit niedrigem Stromverbrauch ist.

9. Signalverarbeitungsvorrichtung (100) gemäß Anspruch 8, wobei in einem Fall, in dem das Umschreibstromsignal, das von der Stromerfassungseinheit (160) während eines Betriebsmodus mit niedrigem Stromverbrauch eine vorbestimmte Datenfolge ist, die Informationsüberschreibeinheit (157) konfiguriert ist, um in einen Überschreibmodus überzugehen, in dem die Informationen, die in der Informationsspeichereinheit (140) gespeichert sind, überschrieben wird.

10. Kommunikationssystem (1), umfassend die Signalverarbeitungsvorrichtung (100) gemäß Anspruch 3 oder 4 und Kommunikationsvorrichtung (200), wobei die Kommunikationsvorrichtung (200) konfiguriert ist, um eine Anweisung zum Umschreiben der vorbestimmten Informationen, die in der Informationsspeichereinheit (140) gespeichert sind, an die Signalverarbeitungsvorrichtung (100) gemäß Anspruch 3 oder 4 bereitzustellen, wobei die Kommunikationsvorrichtung (200) umfasst:
eine Informationserfassungseinheit (221), die konfiguriert ist, um Informationen zu erfassen, die umgeschrieben werden sollen; und
eine Lichtprojektionseinheit (210), die konfiguriert ist, um das optische Signal gemäß den Informationen an die Lichtempfangseinheit (130) zu projizieren, die in der Signalverarbeitungsvorrichtung (100) enthalten sind.

11. Kommunikationssystem (1), umfassend die Signalverarbeitungsvorrichtung (100) gemäß einem der Ansprüche 5 bis 9 und die Kommunikationsvorrichtung (200),
wobei die Kommunikationsvorrichtung (200) konfiguriert ist, um eine Anweisung zum Umschreiben der vorbestimmten Informationen, die in der Informationsspeichereinheit (140) gespeichert sind, an die Signalverarbeitungsvorrichtung (100) bereitzustellen, wobei die Kommunikationsvorrichtung (200) umfasst:
eine Informationserfassungseinheit (221), die konfiguriert ist, um Informationen zu erfassen, die umgeschrieben werden sollen; und
eine Stromsteuereinheit (230), die konfiguriert ist, um das Umschreibstromsignal gemäß den Informationen zu erzeugen.

12. Kommunikationssystem (1), umfassend die Signalverarbeitungsvorrichtung (100) gemäß Anspruch 6 und die Kommunikationsvorrichtung (200), wobei die Kommunikationsvorrichtung (200) konfiguriert ist, um eine Anweisung zum Umschreiben der vorbestimmten Informationen, die in der Informationsspeichereinheit (140) gespeichert sind, der Signalverarbeitungsvorrichtung (100) bereitzustellen, wobei die Kommunikationsvorrichtung (200) umfasst:
eine Informationserfassungseinheit (221), die konfiguriert ist, um Informationen zu erfassen, die umgeschrieben werden sollen; und
eine Stromsteuereinheit (230), die konfiguriert ist, um das Umschreibstromsignal gemäß den Informationen zu erzeugen,
wobei das Betriebssignal ein EIN/AUS-Signal ist und
die Stromsteuereinheit (230) konfiguriert ist, um das Umschreibstromsignal mit einem Stromwert zu erzeugen, der höher ist als ein Stromwert in einem EIN-Signal des Betriebssignals.

13. Kommunikationssystem (1) gemäß Anspruch 12, wobei wenn die Signalverarbeitungsvorrichtung (100) das Betriebssignal, das ein AUS-Signal ist, überträgt oder empfängt, die Stromsteuereinheit (230) konfiguriert ist, das Umschreibstromsignal mit einem Stromwert zu erzeugen, der höher als ein Stromwert in dem AUS-Signal des Betriebssignals ist.

14. Kommunikationssystem (1) gemäß einem der Ansprüche 11 bis 13, die ferner umfasst:
eine Betriebssignal-Verarbeitungseinheit (41), die konfiguriert ist, um ein Betriebssignal entsprechend einem Zustand eines Betriebselements zu erfassen, und
eine Datensignal-Verarbeitungseinheit (42), die konfiguriert ist, um ein Datensignal aus einem Überlagerungssignal zu extrahieren, in dem das Datensignal, das vorbestimmte Informationen anzeigt, dem Betriebssignal überlagert ist.

15. Kommunikationssystem (1) umfassend die Signalverarbeitungsvorrichtung (100) gemäß Anspruch 8 und die Kommunikationsvorrichtung (200), wobei die Kommunikationsvorrichtung (200) konfiguriert ist, um eine Anweisung zum Umschreiben von in der vorbestimmten Informationen, die in der Informationsspeichereinheit (140) gespeichert sind, der Signalverarbeitungsvorrichtung (100) bereitzustellen, wobei die Kommunikationsvorrichtung (200) umfasst:
eine Informationserfassungseinheit (221), die konfiguriert ist, um Informationen zu erfassen, die umgeschrieben werden sollen; und
eine Stromsteuereinheit (230), die konfiguriert ist, um das Umschreibstromsignal gemäß den Informationen zu erzeugen,
wobei die Stromsteuereinheit (230) konfiguriert ist, um der Signalverarbeitungsvorrichtung (100) einen Strom zuzuführen, so dass ein Strom mit einem Stromwert, der gleich oder größer als der vorbestimmte Schwellenwert ist, mit einer vorbestimmten Impulsbreite nach Aktivierung der Signalverarbeitungsvorrichtung fließt.

16. Kommunikationssystem (1) gemäß Anspruch 15, wobei die Stromsteuereinheit (230) konfiguriert ist, das Umschreibstromsignal, das eine vorbestimmte Datenfolge ist, der Signalverarbeitungsvorrichtung (100) zuzuführen, die in dem Modus mit niedrigem Stromverbrauch arbeitet, und konfiguriert ist, um dann das Umschreibstromsignal gemäß den umzuschreibenden Informationen zuzuführen.

## Revendications

1. Dispositif de traitement de signal (100) comprenant :
une unité de transmission de signal superposé (155) configurée pour transmettre un signal de fonctionnement en fonction d'un état d'un élément de fonctionnement (13) à un dispositif de communication (4, 200) à l'extérieur du dispositif de traitement de signal, et pour transmettre un signal superposé au dispositif de communication (4, 200), dans lequel le signal superposé est généré par la superposition d'un signal de données indiquant des informations prédéterminées sur le signal de fonctionnement transmis au dispositif de communication (4, 200) ;
une unité de stockage d'informations (140) configurée pour stocker les informations prédéterminées ;
**caractérisé en ce qu'**il comprend en outre :
une unité de réécriture d'informations (153) configurée pour écraser les informations prédéterminées stockées dans l'unité de stockage d'informations (140) sur la base d'une entrée d'instruction externe, dans lequel l'unité de réécriture d'informations (153) est configurée pour écraser les informations prédéterminées dans l'unité de stockage d'informations (140) pendant que l'unité de transmission de signal superposé (150) transmet le signal superposé au dispositif de communication (4, 200).

2. Dispositif de traitement de signal (100) selon la revendication 1, comprenant en outre :
un terminal côté équipement électrique (110) configuré pour transmettre ou recevoir le signal de fonctionnement à ou depuis un équipement électrique externe pourvu de l'élément de fonctionnement ; et
un terminal côté dispositif de communication (120) configuré pour transmettre ou recevoir le signal de fonctionnement au ou depuis le dispositif de communication (4, 200).

3. Dispositif de traitement de signal (100) selon la revendication 1 ou 2, comprenant en outre :
une unité de réception de lumière (130) configurée pour recevoir un signal optique de l'extérieur,
dans lequel l'unité de réécriture d'informations (153) est configurée pour écraser les informations stockées dans l'unité de stockage d'informations (140) sur la base du signal optique reçu par l'unité de réception de lumière (130).

4. Dispositif de traitement de signal (100) selon la revendication 3, comprenant en outre :
une unité de surveillance (151) configurée pour surveiller une réception du signal optique,
dans lequel, dans un cas où le signal optique est détecté par l'unité de surveillance (151), l'unité de transmission de signal superposé (155) ne transmet pas le signal superposé, et l'unité de réécriture d'informations (153) réécrit les informations stockées dans l'unité de stockage d'informations (140) sur la base du signal optique, et
après qu'un traitement de réécriture réalisé par l'unité de réécriture d'informations (153) est terminé, l'unité de transmission de signal superposé (155) transmet le signal superposé.

5. Dispositif de traitement de signal (100) selon la revendication 1 ou 2, comprenant en outre :
une unité de détection de courant (160) configurée pour détecter une valeur de courant fournie depuis une ligne de signal reliée au dispositif de communication (4, 200),
dans lequel l'unité de réécriture d'informations (153) réécrit les informations prédéterminées stockées dans l'unité de stockage d'informations (140) sur la base d'un signal de courant de réécriture indiqué par des variations de valeur de courant détectée par l'unité de détection de courant (160).

6. Dispositif de traitement de signal (100) selon la revendication 5,
dans lequel le signal de fonctionnement est un signal ON/OFF, et
l'unité de réécriture d'informations (153) reconnaît des variations de valeur de courant en tant que signal de courant de réécriture dans un cas où une valeur de courant supérieure à une valeur de courant dans un signal ON du signal de fonctionnement est détectée par l'unité de détection de courant (160).

7. Dispositif de traitement de signal (100) selon la revendication 6, dans lequel, lorsque le signal de fonctionnement qui est un signal OFF est transmis ou reçu, l'unité de réécriture d'informations (153) reconnaît des variations de valeur de courant en tant que signal de courant de réécriture dans un cas où une valeur de courant qui est supérieure à une valeur de courant dans un signal OFF du signal de fonctionnement est détectée par l'unité de détection de courant.

8. Dispositif de traitement de signal (100) selon l'une quelconque des revendications 5 à 7, comprenant en outre :
une unité de commutation de mode de fonctionnement (157) configurée pour réaliser une commutation entre un mode de fonctionnement ordinaire dans lequel le signal superposé est transmis et un mode de faible consommation de courant dans lequel le signal superposé n'est pas transmis,
dans lequel l'unité de commutation de mode de fonctionnement (157) réalise une commutation dans le mode de fonctionnement ordinaire dans un cas où l'unité de détection de courant (160) détecte un courant qui est supérieur ou égal à une valeur de seuil prédéterminée à une largeur d'impulsion prédéterminée ou plus dans le mode de faible consommation de courant.

9. Dispositif de traitement de signal (100) selon la revendication 8, dans lequel, dans un cas où le signal de courant de réécriture détecté par l'unité de détection de courant (160) pendant un fonctionnement dans le mode de faible consommation de courant est une séquence de données prédéterminée, l'unité de réécriture d'informations (153) est configurée pour passer dans un mode de réécriture dans lequel les informations stockées dans l'unité de stockage d'informations (140) sont réécrites.

10. Système de communication (1) comprenant le dispositif de traitement de signal (100) selon la revendication 3 ou 4 et le dispositif de communication (200), dans lequel le dispositif de communication (200) est configuré pour fournir une instruction de réécriture des informations prédéterminées stockées dans l'unité de stockage d'informations (140) au dispositif de traitement de signal (100), le dispositif de communication (200) comprenant :
une unité d'acquisition d'informations (221) configurée pour acquérir des informations à réécrire ; et
une unité de projection de lumière (210) configurée pour projeter le signal optique selon les informations vers l'unité de réception de lumière (130) comprise dans le dispositif de traitement de signal (100).

11. Système de communication (1) comprenant le dispositif de traitement de signal (100) selon l'une quelconque des revendications 5 à 9 et le dispositif de communication (200), dans lequel le dispositif de communication (200) est configuré pour fournir une instruction de réécriture des informations prédéterminées stockées dans l'unité de stockage d'informations (140) au dispositif de traitement de signal (100), le dispositif de communication (200) comprenant :
une unité d'acquisition d'informations (221) configurée pour acquérir des informations à réécrire ; et
une unité de commande de courant (230) configurée pour générer le signal de courant de réécriture selon les informations.

12. Système de communication (1) comprenant le dispositif de traitement de signal (100) selon la revendication 6 et le dispositif de communication (200), dans lequel le dispositif de communication (200) est configuré pour fournir une instruction de réécriture des informations prédéterminées stockées dans l'unité de stockage d'informations (140) au dispositif de traitement de signal (100), le dispositif de communication (200) comprenant :
une unité d'acquisition d'informations (221) configurée pour acquérir des informations à réécrire ; et
une unité de commande de courant (230) configurée pour générer le signal de courant de réécriture selon les informations,
dans lequel le signal de fonctionnement est un signal ON/OFF, et
l'unité de commande de courant (230) est configurée pour générer le signal de courant de réécriture avec une valeur de courant supérieure à une valeur de courant dans un signal ON du signal de fonctionnement.

13. Système de communication (1) selon la revendication 12, dans lequel, lorsque le dispositif de traitement de signal (100) transmet ou reçoit le signal de fonctionnement qui est un signal OFF, l'unité de commande de courant (230) est configurée pour générer le signal de courant de réécriture avec une valeur de courant supérieure à une valeur de courant dans le signal OFF du signal de fonctionnement.

14. Système de communication (1) selon l'une quelconque des revendications 11 à 13, comprenant en outre :
une unité de traitement de signal de fonctionnement (41) configurée pour détecter un signal de fonctionnement selon un état d'un élément de fonctionnement ; et
une unité de traitement de signal de données (42) configurée pour extraire un signal de données d'un signal superposé dans lequel le signal de données indiquant des informations prédéterminées est superposé sur le signal de fonctionnement.

15. Système de communication (1) comprenant le dispositif de traitement de signal (100) selon la revendication 8 et le dispositif de communication (200), dans lequel le dispositif de communication (200) est configuré pour fournir une instruction de réécriture des informations prédéterminées stockées dans l'unité de stockage d'informations (140) au dispositif de traitement de signal (100), le dispositif de communication (200) comprenant :
une unité d'acquisition d'informations (221) configurée pour acquérir des informations à réécrire ; et
une unité de commande de courant (230) configurée pour générer le signal de courant de réécriture selon les informations,
dans lequel l'unité de commande de courant (230) est configurée pour fournir un courant au dispositif de traitement de signal (100) de sorte qu'un courant avec une valeur de courant supérieure ou égale à la valeur de seuil prédéterminée circule à une largeur d'impulsion prédéterminée après une activation du dispositif de traitement de signal (100).

16. Système de communication (1) selon la revendication 15, dans lequel l'unité de commande de courant (230) est configurée pour fournir le signal de courant de réécriture qui est une séquence de données prédéterminée au dispositif de traitement de signal (100) qui fonctionne dans le mode de faible consommation de courant et est configurée pour ensuite fournir le signal de courant de réécriture selon des informations à réécrire.
